(19) Europäisches Patentamt
European Patent Office
Office européen des brevets

(11) **EP 1 485 282 B1**

(12) **EUROPÄISCHE PATENTSCHRIFT**

(45) Veröffentlichungstag und Bekanntmachung des Hinweises auf die Patenterteilung:
**03.05.2006  Patentblatt 2006/18**

(21) Anmeldenummer: 03712072.2

(22) Anmeldetag: **21.03.2003**

(51) Int Cl.:
*B60T 13/74* *(2006.01)*   *F16D 65/21* *(2006.01)*

(86) Internationale Anmeldenummer:
**PCT/EP2003/002970**

(87) Internationale Veröffentlichungsnummer:
**WO 2003/080415 (02.10.2003 Gazette 2003/40)**

(54) **ELEKTRISCH BETÄTIGBARE FAHRZEUGBREMSE UND VERFAHREN ZUR STEUERUNG EINER ELEKTRISCH BETÄTIGBAREN FAHRZEUGBREMSE**

ELECTRICALLY ACTUATABLE VEHICLE BRAKE AND METHOD FOR CONTROLLING AN ELECTRICALLY ACTUATABLE VEHICLE BRAKE

FREIN AUTOMOBILE ELECTRIQUE ET PROCEDE DE COMMANDE D'UN FREIN AUTOMOBILE ELECTRIQUE

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **21.03.2002  DE 10212618**
**24.06.2002  DE 10228115**

(43) Veröffentlichungstag der Anmeldung:
**15.12.2004  Patentblatt 2004/51**

(73) Patentinhaber: **Lucas Automotive GmbH**
**56070 Koblenz (DE)**

(72) Erfinder:
• **GODLEWSKY, Gregor**
**56170 Bendorf (DE)**
• **MAUR, Thomas**
**56191 Weitersburg (DE)**
• **KELLER, Michael**
**55595 Traisen (DE)**
• **LEITER, Ralf**
**56179 Vallendar (DE)**
• **KINDER, Ralf**
**56337 Eitelborn (DE)**
• **POERTZGEN, Gregor**
**56068 Koblenz (DE)**

(74) Vertreter: **Schmidt, Steffen J.**
**Wuesthoff & Wuesthoff,**
**Patent- und Rechtsanwälte,**
**Schweigerstrasse 2**
**81541 München (DE)**

(56) Entgegenhaltungen:
**EP-A- 1 186 495          WO-A-99/05011**
**DE-A- 19 536 695          DE-A- 19 647 434**
**DE-A- 19 730 094          DE-A- 19 826 053**
**DE-A- 19 835 550          DE-A- 19 947 903**
**FR-A- 1 504 679          US-A- 6 003 640**

EP 1 485 282 B1

**Beschreibung**

Hintergrund der Erfindung

Die Erfindung betrifft eine elektrisch betätigbare Fahrzeugbremse und ein Verfahren zur Steuerung einer elektrisch betätigbaren Fahrzeugbremse. Die Fahrzeugbremse umfasst einen Bremskolben, der auf wenigstens einen Reibbelag wirkt und aus einer Ruhestellung in eine Betätigungsstellung verschiebbar ist, in der der Bremskolben den Reibbelag gegen ein mit einem Rad des Kraftfahrzeuges drehfest zu verbindendes Drehglied der Fahrzeugbremse anlegt, und eine von einem Elektromotor angetriebene, auf den Bremskolben wirkende Getriebeeinheit zum Betätigen des Bremskolbens, wobei der Elektromotor durch eine elektronische Steuereinheit anzusteuern ist, die auch dazu eingerichtet ist, Betriebsparameter des Fahrzeugs, des Elektromotors und/oder der Fahrzeugbremse zu erfassen. Die Erfindung betrifft ferner eine elektrisch betätigbare Fahrzeugbremse, die zusätzlich mit einer Einrichtung zur Festlegung der Ruhestellung des Bremskolbens ausgestattet ist, in der ein vorbestimmtes, gewünschtes Bremslüftspiel konstant gehalten wird.

Stand der Technik

Derartige elektrisch betätigbare Fahrzeugbremsen sind in verschiedenen Ausführungsformen aus dem Stand der Technik bekannt. Die bei diesen Scheibenbremsen im Rahmen eines Bremsvorgangs auftretenden Kräfte lassen sich in Klemmkraft (auch Axialkraft, Querkraft, Zuspannkraft oder Normalkraft genannt) und Umfangskraft (auch Reibkraft genannt) unterteilen. Als Klemmkraft wird diejenige Kraftkomponente bezeichnet, welche von einer Bremsbacke senkrecht zur Ebene der Bremsscheibe in die Bremsscheibe eingeleitet wird. Unter der Umfangskraft hingegen versteht man diejenige Kraftkomponente, welche aufgrund der Bremsreibung zwischen einem Reibbelag der Bremsbacke und der Bremsscheibe in Umfangsrichtung der Bremsscheibe auf die Bremsbacke wirkt. Durch Multiplikation der Umfangskraft mit dem Abstand des Angriffspunkts der Umfangskraft von der Drehachse der Räder lässt sich das Bremsmoment ermitteln.

Bei einer aus der WO 99/05011 bekannten Scheibenbremse wird die Klemmkraft entweder hydraulisch oder mittels eines Elektromotors erzeugt. Im Falle einer hydraulischen Klemmkrafterzeugung wird ein unter Druck gesetztes Hydraulikfluid in eine in einem Gehäuse der Scheibenbremse ausgebildete Hydraulikkammer eingeleitet. Ein in der Hydraulikkammer verschieblich aufgenommener Hohlkolben einer Aktuatoreinrichtung wird von dem Hydraulikfluid in Richtung auf eine der beiden Bremsbacken bewegt und bringt diese in Reibungseingriff mit der Bremsscheibe. Da die Scheibenbremse als Schwimmsattel-Scheibenbremse ausgestaltet ist, wird in bekannter Weise auch die nicht unmittelbar mit dem Kolben zusammenwirkende Bremsbacke gegen die Bremsscheibe angelegt.

Bei einer elektromotorischen Klemmkrafterzeugung wird die Rotationsbewegung einer Motorwelle zunächst mittels eines Planetengetriebes untersetzt und anschließend mittels einer innerhalb des Hohlkolbens angeordneten Mutter-Spindel-Anordnung der Aktuatoreinrichtung in eine Translationsbewegung umgesetzt. Der Hohlkolben wird von dieser Translationsbewegung erfasst und überträgt die Translationsbewegung auf eine der beiden Bremsbacken, welche daraufhin gegen die Bremsscheibe angelegt wird. Bei dieser Fahrzeugbremse ist bei nicht betätigter Bremse eine bei der elektromotorischen Bremsbetätigung auf den Bremskolben wirkende Mutter der Mutter-Spindel-Anordnung in einem definierten Abstand zu dem in seiner Ruhestellung positionierten Bremskolben angeordnet. Um eine optimale Funktion der Fahrzeugbremse zu gewährleisten, sollte dieser Abstand möglichst exakt eingestellt sein, da ein zu großer Abstand zur einer Verlängerung der Ansprechzeit der Bremse führt, während bei zu geringem Abstand ein Restschleifmoment zwischen der sich drehenden Bremsscheibe und den Reibbelägen entstehen könnte.

Bei allen bekannten elektrisch betätigbaren Scheibenbremsen tritt das grundsätzliche Problem auf, dass sich der Abstand zwischen den Reibbelägen und der Bremsscheibe bei nicht betätigter Bremse, das sogenannte Bremslüftspiel, infolge des Verschleißes der Reibbeläge vergrößert und dadurch die Ansprechzeit der Bremse verlängert wird. Ferner besteht bei Bremsenanordnungen von der aus der WO 99/05011 bekannten Art, bei denen die Ruhestellung des Bremskolbens nicht mit Hilfe eines auf den Kolben wirkenden Elements der Getriebeeinheit, sondern mittels einer separaten Einrichtung festgelegt wird, das Problem, dass sich der definierte Abstand zwischen dem bei einer elektromotorischen Bremsbetätigung auf den Bremskolben wirkenden Bauteil der Aktuatoreneinrichtung und dem Bremskolben im Verlauf der Betriebsdauer der Fahrzeugbremse in unerwünschter Weise verkleinern oder vergrößern kann.

Aus der DE 197 30 094 A1 ist ein Verfahren zum Steuern oder Regeln einer Bremse bekannt, mit einer mittels eines Aktuators elektrisch betätigbaren ersten Reibfläche sowie einer zweiten Reibfläche, zwischen denen ein Lüftspiel vorgesehen ist. Dazu wird die Position des Aktuators sowie den dem Aktuator zuzuführenden Strom erfasst und das Anlegen der ersten an die zweite Reibfläche festgestellt und daraufhin ein Kontaktsignal erzeugt.

Um eine Erkennung und Einstellung des Lüftspiels unter Verwendung aktuatorspezifischer Parameter unabhängig von einer speziellen Bremsbetätigung zu ermöglichen und auch während der Fahrt des Kraftfahrzeuges ein Nachstellen des Lüftspiels zu ermöglichen wird zur Feststellung des Anlegens die Änderung des Aktuatorstromes und die Änderung der Aktuatorposition ausgewertet

Aus der DE 198 35 550 A1 ist eine Kfz-Scheibenbremsvorrichtung bekannt, mit einem Bremsgehäuse, einem axial in dem Bremsgehäuse hydraulisch/mechanisch bewegbaren Bremskolben, ferner mit einer hydraulischen Betätigungsvorrichtung, und mit einer mechanischen Betätigungsvorrichtung mit einer rotierbaren Spindel und einer durch die Rotation der Spindel dazu axial verschiebbaren Mutter. Der Bremskolben ist hydraulisch mittels der hydraulischen Betätigungseinrichtung und/oder mechanisch mittels der mechanischen Betätigungseinrichtung beaufschlagbar. Dabei stützt sich der Bremskolben bei mechanischer Betätigung an der Mutter ab.

Um diese Anordnung von Temperatur- und Alterungseffekten unabhängiger zu gestalten ist bei dieser Kfz-Scheibenbremsvorrichtung zumindest ein Sensor vorgesehen, wobei die mechanische Betätigungseinrichtung in Abhängigkeit von durch den Sensor ermitteltem Bremsbelagverschleiß den Bremskolben entsprechend nachführt, und wobei die mechanische Betätigungseinrichtung bei vom Sensor detektierter hydraulisch vorgenommener Feststellung einer zugehörigen Bremse den Bremskolben fixiert.

Die DE 198 26 053 A1 offenbart ein Verfahren und eine Vorrichtung zur Steuerung einer Radbremse für ein Kraftfahrzeug, die eine elektrisch ansteuerbare Stelleinrichtung umfasst. Am Ende eines jeden von einem Fahrer des Kraftfahrzeugs initiierten Bremsvorgangs wird aus der Änderungstendenz von während des Bremsvorgangs erfassten Bremskraft- bzw. Bremsmomentsignalen in Abhängigkeit des von einem Bremsbelag während des Bremsvorgangs zurückgelegten Weges ein Nullpunkt ermittelt, bei dem sich der Bremsbelag von einer Bremsscheibe abhebt. Dieser Nullpunkt dient anschließend als Ausgangspunkt für die Einstellung eines gewünschten Soll-Lüftspiels durch entsprechende Lage- bzw. Winkelregelung eines Elektromotors der Stelleinrichtung.

Die DE 199 47 903 A1 beschreibt ein Verfahren zur Steuerung einer hydraulisch betätigbaren Radbremse, die einen axial verschiebbar in einem Bremszylinder angeordneten Bremskolben umfasst. Der Bremskolben ist gegenüber dem Bremszylinder mittels eines elastischen Dichtrings abgedichtet, der während eines Bremsvorgangs elastisch verformt wird und somit ein selbsttätiges Rückstellmittel zur Wiederherstellung eines Lüftspiels nach Beendigung des Bremsvorgangs darstellt.

Der Erfindung zugrundeliegendes Problem

Der vorliegenden Erfindung liegt das Problem zugrunde, eine elektrisch betätigbare Fahrzeugbremse sowie ein Verfahren zur Steuerung einer derartigen elektrisch betätigbaren Fahrzeugbremse bereitzustellen, die zur Gewährleistung einer erhöhten Betriebssicherheit der Fahrzeugbremse eine Ermittlung des während der Betriebsdauer der Bremse auftretenden Reibbelagverschleißes ermöglichen.

Erfindungsgemäße Lösung

Zur Lösung dieses Problems wird erfindungsgemäß eine elektrisch betätigbare Fahrzeugbremse mit den in den unabhängigen Vorrichtungsansprüchen 1 und 3 angegebenen Merkmalen sowie ein Verfahren zur Steuerung einer elektrisch betätigbaren Fahrzeugbremse gemäß den unabhängigen Verfahrensansprüchen 19 und 21 vorgeschlagen.

Die elektrisch betätigbare Fahrzeugbremse umfasst einen Bremskolben, der auf wenigstens einen Reibbelag wirkt, und aus einer Ruhestellung in eine Betätigungsstellung verschiebbar ist, in der der Bremskolben den Reibbelag gegen ein mit einem Rad des Kraftfahrzeuges drehfest zu verbindendes Drehglied der Fahrzeugbremse anlegt, und eine von einem Elektromotor angetriebene, auf den Bremskolben wirkende Getriebeeinheit zum Betätigen des Bremskolbens, wobei der Elektromotor durch eine elektronische Steuereinheit anzusteuern ist, die auch dazu eingerichtet ist, Betriebsparameter des Fahrzeugs, des Elektromotors und/oder der Fahrzeugbremse zu erfassen. Die elektronische Steuereinheit ist dazu eingerichtet und programmiert, mittels eines in ihr ablaufenden Steuer- und Auswerteprogramms den Elektromotor so anzusteuern, dass der Bremskolben in Reaktion auf die Erfassung mindestens einer vorbestimmten Betriebsbedingung in eine erste Richtung in seine Betätigungsstellung verschoben wird, in der der wenigstens eine Reibbelag an dem Drehglied anliegt, und der Bremskolben anschließend um einen Weg, der einem vorbestimmten, gewünschten Bremslüftspiegel entspricht, in eine der ersten Richtung entgegengesetzten, zweite Richtung in seine Ruhestellung verschoben wird.

Die elektronische Steuereinheit ist dazu eingerichtet, den Elektromotor so anzusteuern, dass der Bremskolben vor dem Verschieben in seine Betätigungsstellung in eine vorbestimmte Nullstellung verschoben wird. Darüber hinaus ist die elektronische Steuereinheit dazu eingerichtet, eine Größe zu erfassen, die mit einem von dem Bremskolben zwischen seiner Nullstellung und seiner Betätigungsstellung zurückgelegten Weg korreliert ist, und die erfasste Größe mit einer gespeicherten Referenzgröße zu vergleichen, wobei die Referenzgröße mit einem von dem Bremskolben zurückgelegten Weg bei einer mit neuen Reibbelägen ausgestatteten Fahrzeugbremse korreliert ist.

Durch die regelmäßige Durchführung einer derartigen Kalibrierung der erfindungsgemäßen Bremsanordnung kann der Verschleiß der Reibbeläge zuverlässig kompensiert und das Bremslüftspiel auf einem konstanten Weg gehalten werden. Die Häufigkeit, mit der die Kalibrierung durchgeführt wird, kann durch geeignete Auswahl der zu erfassenden Betriebsbedingung beliebig eingestellt werden und hängt beispielsweise von den Anforderungen ab, die durch Funktionen wie zum Beispiel ABS, ASR, EPB etc. an das System gestellt werden.

Durch den Verschleiß der Reibbeläge und der daraus resultierenden Vergrößerung des Bremslüftspiels verlängert sich der von dem Bremskolben von der Nullstellung bis zur Betätigungsstellung zurückzulegende Weg im Vergleich zu einem von dem Bremskolben zurückgelegten Weg bei einer Fahrzeugbremse mit neuen, unverschlissenen Bremsbelägen. Der Vergleich zwischen der erfassten Größe, die mit dem von dem Bremskolben zurückgelegten Weg korreliert ist, und der Referenzgröße, die mit dem von dem Bremskolben zurückgelegten Weg bei einer mit neuen Reibbelägen ausgestatteten Fahrzeugbremse korreliert ist, ermöglicht daher eine Bestimmung des Gesamtverschleißes der Reibbeläge. Zur Ausführung der oben beschriebenen Funktionen kann die elektronische Steuereinheit eine mit einem Speicher ausgestattete Rechnereinheit aufweisen, die eine dem Reibbelagverschleiß entsprechende Differenz aus der erfassten Größe und der im Speicher gespeicherten Referenzgröße berechnet. Eine geeignete, mit dem von dem Bremskolben zurückgelegten Weg korrellerte Größe ist beispielsweise die Anzahl der Schritte des Elektromotors. Die erfindungsgemäße Bremsenanordnung umfasst daher vorzugsweise einen Sensor, der die Schritte des Elektromotors erfasst. Der von dem Sensor ausgegebene Wert kann dann in der elektronischen Steuereinheit auf Null gesetzt werden, wenn sich der Bremskolben in seiner Nullstellung befindet.

Wenn die erfindungsgemäße Fahrzeugbremse zusätzlich eine Einrichtung zur Festlegung der Ruhestellung des Bremskolbens umfasst, die die Ruhestellung des Bremskolbens so festlegen, dass ein vorbestimmtes Bremslüftspiel während der Betriebsdauer der Bremse konstant gehalten wird, ist die elektronische Steuereinheit dazu eingerichtet und programmiert, mittels eines in ihr ablaufenden Steuer- und Auswerteprogramms den Elektromotor so zu steuern, dass ein bei einer elektrischen Betätigung der Bremse auf den Bremskolben wirkendes Element der Getriebeeinheit in Reaktion auf die Erfassung mindestens einer vorbestimmten Betriebsbedingung in eine erste Richtung In seine Betätigungsstellung verschoben wird, In der der von dem Element betätigte Bremskolben den wenigstens einen Reibbelag an das Drehglied anlegt. Anschließend wird das Element um einen Weg, der dem vorbestimmten Bremslüftspiel und, falls gewünscht, einem vorbestimmten Abstand zwischen dem Element und dem Bremskolben bei nicht betätigter Bremse entspricht, in eine der ersten Richtung entgegengesetzte zweite Richtung in seine Ruhestellung verschoben.

Die elektronische Steuereinheit bei der mit der Einrichtung zur Festlegung der Ruhestellung des Bremskolbens ausgestatteten Fahrzeugbremse ist dazu eingerichtet, den Elektromotor so anzusteuern, dass das auf den Bremskolben wirkende Element der Getriebeeinheit vor dem Verschieben in seine Betätigungsstellung in eine vorbestimmte Nullstellung verschoben wird. Die elektronische Steuereinheit ist dann ferner dazu eingerichtet, eine Größe zu erfassen, die mit einem von dem Element zwischen seiner Nullstellung und seiner Betätigungsstellung zurückgelegten Weg korreliert ist, und die erfasste Größe mit einer gespeicherten Referenzgröße zu vergleichen, wobei die Referenzgröße mit einem von dem Element zurückgelegten Weg bei einer mit neuen Reibbelägen ausgestatteten Fahrzeugbremse korreliert ist.

Wenn die Ruhestellung des Bremskolbens bei einer derartigen elektrisch betätigbaren Bremse, die beispielsweise so gestaltet sein kann, dass der Bremskolben sowohl hydraulisch als auch elektromotorisch betätigt werden kann, durch eine separate Einrichtung festgelegt wird, kann mit Hilfe einer derartigen Kalibrierung der bei nicht betätigter Bremse vorhandene Abstand zwischen dem bei einer elektrischen Bremsbetätigung auf den Bremskolben wirkenden Element der Getriebeeinheit und dem Bremskolben konstant auf dem gewünschten Wert gehalten werden.

Wie der Weg des Bremskolbens, verlängert sich auch der von dem auf den Bremskolben wirkenden Element von der Nullstellung bis zur Betätigungsstellung zurückzulegende Weg in Abhängigkeit des Verschleißes der Reibbeläge. Wenn die Ruhestellung des Bremskolbens von einer separaten Einrichtung, beispielsweise einer mit dem Bremskolben zusammenwirkenden "Rollback"-Dichtung, festgelegt wird, kann daher auch ein Vergleich der gemessenen, mit dem von dem Element zurückgelegten Weg korrelierten Größe mit einer Referenzgröße, die mit dem von dem Element zurückgelegten Weg bei einer mit neuen Reibbelägen ausgestatteten Fahrzeugbremse korreliert ist, zur Bestimmung des Gesamtverschleißes der Reibbeläge herangezogen werden. Die elektronische Steuereinheit weist dann vorzugsweise eine mit einem Speicher ausgestattete Rechnereinheit auf, um eine dem Reibbelagverschleiß entsprechende Differenz aus der erfassten Größe und der im Speicher gespeicherten Referenzgröße zu berechnen. Eine geeignete, mit dem von dem Element zurückgelegten Weg korrelierte Größe ist beispielsweise die Anzahl der Schritte des Elektromotors. Daher ist vorzugsweise ein Sensor vorhanden, der die Schritte des Elektromotors erfasst. Der von dem Sensor ausgegebene Wert kann dann in der elektronischen Steuereinheit auf Null gesetzt werden, wenn sich das auf den Bremskolben wirkende Element in seiner Nullstellung befindet.

Moderne Kraftfahrzeuge sind mit einem Bus-System (zum Beispiel CAN) ausgestattet, um ermittelte Betriebsparameter von Komponenten oder Baugruppen des Kraftfahrzeuges den im Kraftfahrzeug vorhandenen Steuerungen bereitzustellen bzw. Ansteuersignale von den Steuerungen an Komponenten oder Baugruppen des Kraftfahrzeuges zu übermitteln. Daher werden Betriebsparameter des Fahrzeugs, des Elektromotors und/oder der Fahrzeugbremse (zum Beispiel Betriebszustand des Fahrzeugs, Stromaufnahme des Elektromotors und von der Fahrzeugbremse ausgeübte Bremskraft) in der Regel für andere Zwecke ohnehin erfasst und ausgewertet. Somit entsteht für die Erfassung der vorbestimmten Betriebsbedingung sowie für die Erfassung der Betätigungsstellung des Bremskolbens kein weiterer Aufwand an Komponenten, Verschaltung etc.. Somit können die aus der Erfindung resultierende erhöhte Betriebssicherheit sowie die kurze Ansprechzeit des Bremssystems bei geringstem zusätzlichem Aufwand bereitgestellt werden. Sofern die für die Kalibrierung des Bremssystems erforderlichen Betriebsparameter des Fahrzeugs, des Elektromotors und/oder der Fahrzeugbremse nicht in dem Bus-System verfügbar sind, ist es jedoch erforderlich, diese Daten der elektronischen Steuereinheit (ECU) in sonstiger Weise (durch geeignete Sensoren) bereitzustellen.

Ausgestaltungen und Weiterbildungen der erfindungsgemäßen Lösung

Vorzugsweise ist die elektronische Steuereinheit bei der Ausführungsform der elektrisch betätigbaren Fahrzeugbremse ohne die Einrichtung zur Festlegung der Ruhestellung des Bremskolbens dazu eingerichtet, ein Warnsignal an den Fahrzeugführer auszugeben, wenn eine Differenz zwischen der erfassten Größe und der Referenzgröße einen vorbestimmten Wert überschreitet. Hierbei kann außerdem oder stattdessen auch eine quantitative Anzeige (zum Beispiel mittels einer Balkenanzeige) der Dicke des Bremsbelages für den Fahrer erfolgen. Der vorbestimmte Wert kann beispielsweise einem kritischen Verschleißwert der Reibbeläge entsprechen, bei dem ein Wechsel der Reibbeläge erfolgen sollte. Das an den Fahrer ausgegebene Signal kann ein akustisches oder optisches Signal sein, das beispielsweise zu Beginn einer Fahrt, beim Anschalten der Zündung ausgegeben wird.

Der bei der Fahrzeugbremes mit der Einrichtung zur Festlegung der Ruhestellung des Bremskolbens durch die "Rollback-Dichtung" bewirkte Effekt und die dazu führende Ausgestaltung einer solchen Dichtung ist zum Beispiel in der DE 196 47 434 A1 beschrieben. Beim Bremsen bewegt der Kolben sich durch Hydraulikdruck in Richtung auf die Bremsscheibe und der Elastomerdichtring wird von dem sich verschiebenden Kolben etwas mitgenommen und dadurch sowie durch den Hydraulikdruck etwas verformt.

Bei einer Entlastung der Bremse d. h. beim Wegfall des Hydraulikdrucks, übt der verformte Elastomerdichtring eine Rückstellkraft auf den Kolben aus und nimmt diesen ein Stück in Richtung von der Bremsscheibe weg mit. Dieses Verhalten ist durchaus erwünscht, denn es stellt den Bremskolben zurück und sorgt dafür, dass sich nach Beendigung einer Bremsung zwischen dem Reibbelag und der Bremsscheibe das sog. Brems-Lüftspiel einstellt. Es wird hierzu auf die deutsche Patentschrift 1 600 008 verwiesen, in der dieses Verhalten ausführlich beschrieben ist. Um das zuvor beschriebene Verhalten des Dichtringes, der vorzugsweise aus einem Elastomer hergestellt ist, zu unterstützen, wird häufig sogar die bremsbelagseitige Seitenwand der Nut abgeschrägt, in der der Dichtring gehalten ist, d. h. der Nutquerschnitt erweitert sich vom Nutgrund aus (siehe hierzu FR PS 1 504 679).

Damit der Dichtring den Bremskolben zurückstellen kann, ist eine gewisse Haftung zwischen den zusammenwirkenden Flächen des Dichtringes und des Bremskolbens erforderlich. Zu gute Gleiteigenschaften zwischen diesen Flächen würden ein Rückstellen des Kolbens verhindern, da letzterer nahezu sofort relativ zum Dichtring gleitend verschoben werden würde, wodurch keine Verformung des Dichtringes und damit auch keine Rückstellkraft mehr vorhanden wäre.

Andererseits ist unter bestimmte Umständen ein Gleiten des Bremskolbens relativ zum Dichtungsring sehr erwünscht. Dies ist beispielsweise beim Zusammenbau der Bremse der Fall. Hier muss der Bremskolben, nachdem der Dichtungsring in die ihn aufnehmende Nut in der Zylinderwandung gesetzt worden ist, in den Zylinder geschoben werden. Würden Kolben und Dichtring relativ zueinander nicht gleiten können, wäre es sehr wahrscheinlich, dass sich der Dichtring in der Nut verdrehen würde oder dass er beschädigt und teilweise abgeschert würde.

Ein Gleiten des Bremskolbens relativ zum Dichtring ist aber auch in bestimmten Betriebszuständen der Bremse notwendig, beispielsweise dann, wenn die Dicke des Reibbelages sich durch Abnutzung verringert, so dass der Bremskolben entsprechend weiter in Richtung auf die Bremsscheibe verschoben werden muss, um den Reibbelag an die Bremsscheibe anzulegen. Unter solchen Umständen wird die Verformbarkeit des Elastomerdichtungsringes überschritten und der Kolben muss relativ zum Dichtring gleiten, um eine neue Stellung relativ zum Dichtring einzunehmen.

Ein Gleiten des Bremskolbens relativ zum Dichtring kann auch bei sehr starken Bremsungen erforderlich werden, da sich dann aufgrund der großen Kräfte das Bremsgehäuse aufweitet, das Material des Reibbelages komprimiert wird, etc., so dass ein entsprechend größerer Verschiebeweg des Bremskolbens erbracht werden muss.

Die elektronische Steuereinheit der Fahrzeugbremse mit der Einrichtung zur Festlegung der Ruhestellung des Bremskolbens kann darüber hinaus dazu eingerichtet sein, ein Warnsignal an den Fahrzeugführer auszugeben, wenn eine Differenz zwischen der erfassten, mit dem von dem Element von der Nullstellung bis zur Betätigungsstellung zurückgelegten Weg korrelierten Größe und der gespeicherten, mit dem von dem Element zurückzulegenden Weg bei einer mit neuen Reibbelägen ausgestatteten Fahrzeugbremse korrelierten Referenzgröße einen vorbestimmten Wert überschreitet. Der vorbestimmte Wert entspricht vorzugsweise einem kritischen Verschleißwert der Reibbeläge, bei dem ein Wechsel der Reibbeläge erfolgen sollte.

In einer bevorzugten Ausführungsform der Erfindung ist die vorbestimmte Betriebsbedingung erfüllt, wenn das Fahrzeug seit der letzten Kalibrierung der Bremse eine vorbestimmte Strecke zurückgelegt hat. Eine geeignete Strecke können beispielsweise 500 km sein. Dadurch wird auf einfache Art und Weise gewährleistet, dass das Bremssystem regelmäßig kalibriert wird.

Alternativ dazu kann die vorbestimmte Betriebsbedingung erfüllt sein, wenn eine zu einem Klemmkraftgradienten korrelierte Größe einen vorbestimmten, kritischen Wert überschreitet. Die Steigung einer Klemmkraft / Zeit-Kennlinie (Klemmkraftgradient) nach dem Anlegen der Reibbeläge an die Bremsscheibe kann als Maß für den Zustand der Reibbeläge dienen, da neue, unverschlissene Reibbeläge elastischer und damit kompressibler sind, als alte, bereits verschlissene Reibbeläge. Dadurch erfolgt der Aufbau der Klemmkraft bei neuen Reibbelägen langsamer als bei alten Reibbelägen, so dass eine Zunahme des Klemmkraftgradienten als Indiz für einen zunehmenden Verschleiß der Reibbeläge gewertet werden kann. Bei dieser Ausführungsform der Erfindung erfolgt die Kalibrierung der Bremse demzufolge immer dann, wenn eine zu dem Klemmkraftgradienten korrelierte Größe einen kritischen Wert überschreitet, der seinerseits ein Maß für einen definierten Reibbelagverschleiß ist. Eine geeignete, zu dem Klemmkraftgradienten korrelierte Größe kann der Klemmkraftgradient selbst oder die Steigung einer Stromaufnahme/Zeit-Kennlinie des Elektromotors (Stromaufnahmegradient) nach dem Anlegen der Reibbeläge an die Bremsscheibe sein.

Die Kalibrierung der erfindungsgemäßen Fahrzeugbremse kann auf der Grundlage der Erfassung nur einer der beiden oben genannten Betriebsbedingungen erfolgen. Es ist jedoch auch möglich, die den beiden Betriebsbedingungen zugrundeliegenden Betriebsparameter fortlaufend zu erfassen und die Kalibrierung der Bremse immer dann durchzuführen, wenn eine der Bedingungen oder beide Bedingungen erfüllt sind.

Vorzugsweise erfolgt die Kalibrierung der erfindungsgemäßen Fahrzeugbremse nur dann, wenn die Zündung des Fahrzeugs ausgeschaltet ist, wenn sich das Fahrzeug im Stillstand befindet und/oder wenn sich das Fahrzeug in der Ebene befindet, und/oder wenn die Bremse nicht oder noch nicht zugespannt ist Dadurch können unerwünschte, durch den Kalibrierungsvorgang verursachte Betriebszustände des Fahrzeugs vermieden werden.

Die elektronische Steuereinheit kann dazu eingerichtet sein, während des Verschiebens des Bremskolbens in seine Betätigungsstellung, in der der Bremskolben wenigstens einen Reibbelag an das Drehglied anlegt, eine zu einer Klemmkraft korrelierte Größe sowie eine für die Betätigung des Elektromotors charakteristische Größe durch entsprechende Aufnehmer zu erfassen, daraus die Betätigungsstellung des Bremskolbens zu ermitteln, bei der der Reibbelag an dem Drehglied der Fahrzeugbremse anliegt, und diese ermittelte Betätigungsstellung für die Verschiebungen des Bremskolbens und/oder des auf den Bremskolben wirkenden Elements der Getriebeeinheit zugrundezulegen. Bei einer derartigen Ausgestaltung der erfindungsgemäßen Bremsenanordnung kann die Betätigungsstellung des Bremskolbens besonders genau ermittelt und somit das gewünschte Bremslüftspiel bzw. der gewünschte Abstand zwischen dem auf den Bremskolben wirkenden Element und dem Bremskolben exakt eingestellt werden.

In einer bevorzugten Ausführungsform der Erfindung ist die elektronische Steuereinheit dazu eingerichtet und programmiert, aus den Wertepaaren der erfaßten Klemmkraft und der zugehörigen, für die Betätigung des Elektromotors charakteristischen Größe mittels eines Approximationsverfahrens eine Näherungsfunktion zu bestimmen. Zu diesem Zweck kann die elektronische Steuereinheit eine mit einem Speicher zum Ablegen der ermittelten Betätigungsstellung ausgestattete Rechnereinheit umfassen.

Weiterhin kann die elektronische Steuereinheit dazu eingerichtet und programmiert sein, aus wenigstens drei Wertepaaren mit dem Approximationsverfahren eine polynomiale Näherungsfunktion wenigstens 2. Ordnung zu bestimmen. Als Approximationsverfahren können die unterschiedlichsten Verfahren zum Einsatz kommen: Newtonsches Näherungsverfahren, Lagrangesches Verfahren, etc. Alternativ dazu können die drei Parameter der Näherungsfunktion 2. Ordnung auch mittels eines linearen Gleichungssystems bestimmt werden, das zum Beispiel durch den Gauß-Algorithmus gelöst wird.

Die elektronische Steuereinheit ist vorzugsweise auch dazu eingerichtet und programmiert, in einem weiteren Schritt ausgehend von der ermittelten Näherungsfunktion eine Nullstelle der polynomialen Näherungsfunktion mit positiver Steigung, oder, falls eine Nullstelle mit positiver Steigung nicht bestimmbar ist, das Minimum der polynomialen Näherungsfunktion als Betätigungsstellung des Bremskolbens, bei der Reibbelag an dem Drehglied der Fahrzeugbremse anliegt, zu bestimmen.

Die für die Betätigung des Elektromotors charakteristischen Größen können erfindungsgemäß die Stromaufnahme, aber auch Weg- oder Winkelschritte des Elektromotors umfassen.

Die zu der Klemmkraft korrelierte Größe kann die Klemmkraft selbst, die Umfangskraft, das Bremsmoment oder die vom Rad auf die Fahrbahn aufgebrachte Reibkraft umfassen.

Infolge der beim Lösen der Bremse freiwerdenden Rückstellkräfte und aufgrund der Elastizität der Reibbeläge wird eine Kiemmkraft/Motorschritt-Kennlinie beim Freigeben der Bremse im Vergleich zu einer Klemmkraft/Motorschritt-Kennlinie bei Zustellen der Bremse seitlich nach links versetzt, d.h. ein Zustellvorgang verläuft entlang eines rechten Kurvenastes, während der Lösevorgang einem linken Kurvenast folgt.

Um diese aus diesem Hystereseverhalten resultierende Verschiebung der Kennlinie bzw. der Betätigungsstellung zu berücksichtigen, kann die Betätigungsstellung des Bremskolbens, bei der die Bremsbeläge das Bremslüftspiel überwunden haben und (gerade) an der Bremsscheibe anliegen, sowohl aus dem aufsteigenden als auch aus dem abfallenden Ast der Klemmkraft/Motorschritt-Kennlinie ermittelt werden. Aus diesen beiden Werten kann dann beispielsweise ein Mittelwert gebildet werden.

Das erfindungsgemäße Verfahren zur Steuerung einer elektrisch betätigbaren Fahrzeugbremse umfasst das Bestimmen eines gewünschten Bremslüftspiels sowie das Erfassen mindestens einer vorbestimmten Betriebsbedingung. In Reaktion auf die Erfassung der mindestens einen vorbestimmten Betriebsbedingung wird der Bremskolben in eine erste Richtung in seine Betätigungsstellung, in der der wenigstens eine Reibbelag an dem Drehglied anliegt, verschoben. Anschließend wird der Bremskolben um einen Weg, der dem vorbestimmten, gewünschten Bremslüftspiel entspricht, in eine der ersten Richtung entgegengesetzte zweite Richtung in seine Ruhestellung zurückverschoben.

Vorzugsweise wird der Bremskolben bei dem erfindungsgemäßen Steuerungsverfahren vor dem Verschieben in seine Betätigungsstellung in eine vorbestimmte Nullstellung verschoben und eine Größe erfasst, die mit dem von dem Bremskolben zwischen seiner Nullstellung und seiner Betätigungsstellung zurückgelegten Weg korreliert ist. Anschließend wird die erfasste Größe mit einer gespeicherten Referenzgröße verglichen, die mit einem von dem Bremskolben zurückgelegten Weg bei einer mit neuen Reibbelägen ausgestatteten Fahrzeugbremse korreliert ist.

Bei einer besonders bevorzugten Ausführungsform des erfindungsgemäßen Steuerungsverfahrens wird ein Warnsignal an den Fahrzeugführer ausgegeben, wenn eine Differenz zwischen dieser erfassten Größe und der Referenzgröße einen vorbestimmten Wert überschreitet.

In ähnlicher Weise umfasst das erfindungsgemäße Verfahren zur Steuerung einer mit einer Einrichtung zur Festlegung der Ruhestellung des Bremskolbens ausgestatteten Fahrzeugbremse das Bestimmen eines gewünschten Abstands zwischen dem auf den Bremskolben wirkenden Element der Getriebeeinheit und dem Bremskolben bei nicht betätigter Bremse sowie das Erfassen mindestens einer vorbestimmten Betriebsbedingung. In Reaktion auf die Erfassung der mindestens einen vorbestimmten Betriebsbedingung wird das auf den Bremskolben wirkende Element der Getriebeeinheit in eine erste Richtung in seine Betätigungsstellung verschoben, in der der von dem Element betätigte Bremskolben den wenigstens einen Reibbelag an das Drehglied anlegt. Anschließend wird das Element um einen Weg, der einer Summe aus dem vorbestimmten, gewünschten Bremslüftspiel und dem vorbestimmten, gewünschten Abstand zwischen dem Element und dem Bremskolben bei nicht betätigter Bremse entspricht, in eine der ersten Richtung entgegengesetzte zweite Richtung in seine Ruhestellung zurückverschoben.

Vorzugsweise wird das auf den Bremskolben wirkende Element der Getriebeeinheit bei dem erfindungsgemäßen Steuerungsverfahren vor dem Verschieben in seine Betätigungsstellung in eine vorbestimmte Nullstellung verschoben und eine Größe, die mit dem von dem Element zwischen seiner Nullstellung und seiner Betätigungsstellung zurückgelegten Weg korreliert ist, erfasst. Anschließend wird die erfasste Größe mit einer gespeicherten Referenzgröße verglichen, die mit einem von dem Element zurückgelegten Weg bei einer mit neuen Reibbelägen ausgestatteten Fahrzeugbremse korreliert ist

Bei einer besonders bevorzugten Ausführungsform des erfindungsgemäßen Steuerungsverfahrens wird ein Warnsignal an den Fahrzeugführer ausgegeben, wenn eine Differenz zwischen dieser erfassten Größe und der Referenzgröße einen vorbestimmten Wert überschreitet.

Weitere Einzelheiten, Merkmale und Abwandlungen der Erfindung sind unter Bezugnahme auf die Zeichnungen nachstehend erläutert.

Kurzbeschreibung der Zeichnungen

Fig. 1 zeigt eine schematische Darstellung einer ersten elektrisch betätigbaren Kraftfahrzeug-Scheibenbremse mit neuen Reibbelägen im Längsschnitt.

Fig. 2 zeigt eine schematische Darstellung der ersten elektrisch betätigbaren Kraftfahrzeug-Scheibenbremse mit verschlissenen Reibbelägen im Längsschnitt.

Fig. 3 zeigt ein Flussdiagramm, in dem der Ablauf eines Verfahrens zur Steuerung der in den Fig. 1 und 2 gezeigten Scheibenbremse dargestellt ist.

Fig. 4 zeigt eine Klemmkraft/Motorschritt-Kennlinie einer erfindungsgemäßen Kraftfahrzeug-Scheibenbremse.

Fig. 5 zeigt eine schematische Darstellung einer weiteren elektrisch betätigbaren Kraftfahrzeug-Scheibenbremse mit neuen Reibbelägen im Längsschnitt.

Fig. 6 zeigt eine schematische Darstellung der weiteren elektrisch betätigbaren Kraftfahrzeug-Scheibenbremse mit verschlissenen Reibbelägen im Längsschnitt.

Fig. 7 zeigt ein Flussdiagramm, in dem der Ablauf eines Verfahrens zur Steurung der in den Fig. 5 und 6 gezeigten Scheibenbremse dargestellt ist.

Fig. 8 zeigt ein Flussdiagramm, in dem ein erstes Ausführungsbeispiel eines Verfahrens zur Abfrage von Bedingungen vor der Durchführung des Kalibrierungsverfahrens gemäß Fig. 3 bzw. Fig. 7 dargestellt ist.

Fig. 9 zeigt ein Flussdiagramm, in dem ein zweites Ausführungsbeispiel eines Verfahrens zur Abfrage von Bedingungen vor der Durchführung des Kalibrierungsverfahrens gemäß Fig. 3 bzw. Fig. 7 dargestellt ist.

Fig. 10 zeigt ein Flussdiagramm, in dem ein drittes Ausführungsbeispiel eines Verfahrens zur Abfrage von Bedingungen vor der Durchführung des Kalibrierungsverfahrens gemäß Fig. 3 bzw. Fig. 7 dargestellt ist.

Detaillierte Beschreibung der bevorzugten Ausführungsformen

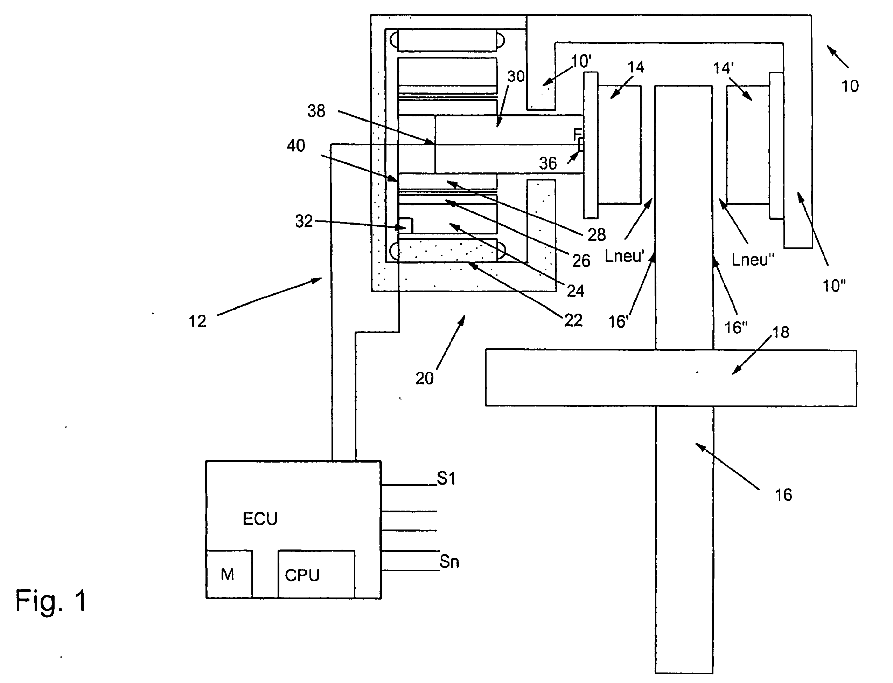

Fig. 1 zeigt eine elektrisch betätigbare Kraftfahrzeug-Scheibenbremse, die einen im Längsschnitt im wesentlichen U-förmigen Bremssattel 10 sowie eine an dem Bremssattel 10 angeordnete elektrische Betätigungseinheit 12 aufweist. In dem Bremssattel 10 sind an dessen beiden Schenkeln 10', 10" zwei (in nicht weiter veranschaulichten Führungen aufgenommene) Reibbeläge 14, 14' angeordnet. Die beiden Reibbeläge 14, 14' sind zu beiden Seiten einer durch den Bremssattel 10 übergriffenen Bremsscheibe 16 angeordnet und wirken mit jeweils einer Seitenfläche 16', 16" der Bremsscheibe 16 zusammen, die drehfest mit einem lediglich teilweise gezeigten Achsstummel 18 des Kraftfahrzeuges verbunden ist. Die Reibbeläge 14, 14' sind im Bremssattel 10 auf die Bremsscheibe 16 hin bzw. von ihr weg verschiebbar angeordnet. Dabei handelt es sich in der gezeigten Ausführungsform um eine Schwimmsattelanordnung, bei der einer der Reibbeläge 14 durch die Betätigungseinheit 12 direkt und der andere Reibbelag 14' durch die Wirkung einer vom Bremssattel 10 aufgebrachten Reaktionskraft mit der Bremsscheibe 16 in Reibungseingriff bringbar ist.

Die Betätigungseinheit 12 ist seitlich an dem Bremssattel 10 angesetzt und weist einen Elektromotor 20 auf, der in der gezeigten Ausführungsform ein Innenläufermotor mit einem am Gehäuse fest angeordneten Stator 22 und einem darin umlaufenden Rotor 24 ist Im Innern des Rotors 24 ist eine Innenverzahnung 26 angeordnet, die eine Drehung des Rotors 24 auf einen Kranz 28 mit einer Außenverzahnung übertragen kann, der drehfest aber axial verschiebbar auf einem Bremskolben 30 angeordnet ist, welcher durch den Elektromotor 20 hindurch bis zu dem Reibbelag 14 ragt. Dieses nach Art einer Mutter/Spindelanordnung arbeitende Getriebe 26, 28 hat eine relativ hohe Untersetzung und dient dazu, die Drehbewegung des Elektromotors 20 in eine Längsbewegung des Bremskolbens 30 umzusetzen.

Der Elektromotor 20 ist über entsprechende Leitungen mit einer mit einer Rechnereinheit CPU und einem Speicher M ausgestatteten, elektronischen Steuereinheit ECU für die Erzeugung der Ansteuersignale des Elektromotors 20 verbunden. Aus im Kraftfahrzeug vorhandenen Sensoren S1 ... Sn werden für Betriebszustände des Kraftfahrzeuges repräsentative Signale an die elektronische Steuereinheit ECU geschickt. In dem Elektromotor 20 ist ebenfalls ein Sensor 32 vorhanden, der die Schritte des Elektomotors 20 erfasst und ein entsprechendes Signal an die elektronische Steuereinheit ECU übermittelt.

Ein Signal F, das die Klemmkraft wiedergibt, wird durch einen zwischen dem Bremskolben 30 und dem Reibbelag 14 angeordneten Kraftsensor 36 erzeugt und an die elektronische Steuereinheit ECU geleitet In der elektronischen Steuereinheit ECU kann aus den von dem Kraftsensor 36 übermittelten Signalen eine Klemmkraft/Zeit-Kennlinie (F/t-Kennlinie) und daraus ein Klemmkraftgradient dF/dt ermittelt werden. Da die elektronische Steuereinheit ECU den Ansteuerstrom für den Elektromotor 20 liefert, ist es darüber hinaus ohne weiteres möglich, in der elektronischen Steuereinheit ECU den funktionellen Zusammenhang zwischen der von der Fahrzeugbremse ausgeübten Klemmkraft F und dem dafür eingesetzten Strom bzw. der ausgeführten Motorschritte des Elektromotors 20 innerhalb eines Bremszyklus (Zustellen der Bremsbeläge 14, 14' an der Bremsscheibe 16 und anschließendes Freistellen der Bremsbeläge 14, 14' von der Bremsscheibe 16) zu bestimmen.

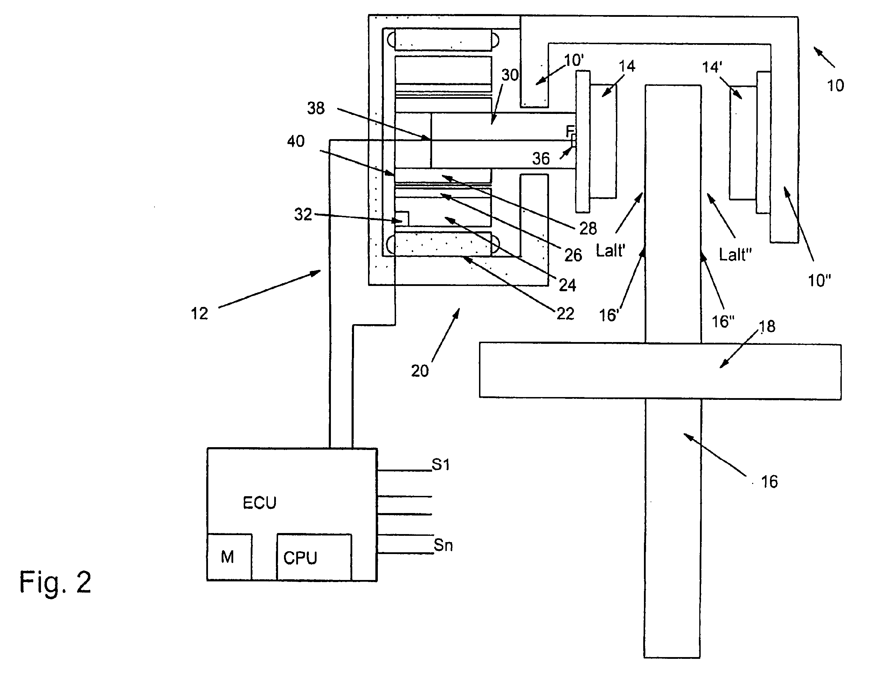

Das Bremslüftspiel $L_{neu}$ bei einer in der Fig. 1 gezeigten, mit neuen Bremsbelägen 14, 14' ausgestatteten Bremsenanordnung ergibt sich aus der Summe der Abstände $L_{neu}$' zwischen dem ersten Reibbelag 14 und der Seitenfläche 16' Bremsscheibe 16 und $L_{neu}$" zwischen dem zweiten Reibbelag 14' und der Seitenfläche 16" Bremsscheibe 16. Wie in der Fig. 2 zu sehen ist, vergrößert sich das Bremslüftspiel infolge des Reibbelagverschleißes bei einer mit alten, verschlissenen Reibbelägen 14,14' ausgestatteten Bremse auf einen Wert $L_{alt}$, der sich wiederum aus der Summe der Abstände $L_{alt}$' zwischen dem ersten Reibbelag 14 und der Seitenfläche 16' Bremsscheibe 16 und $L_{alt}$" zwischen dem zweiten Reibbelag 14' und der Seitenfläche 16" Bremsscheibe 16 ergibt

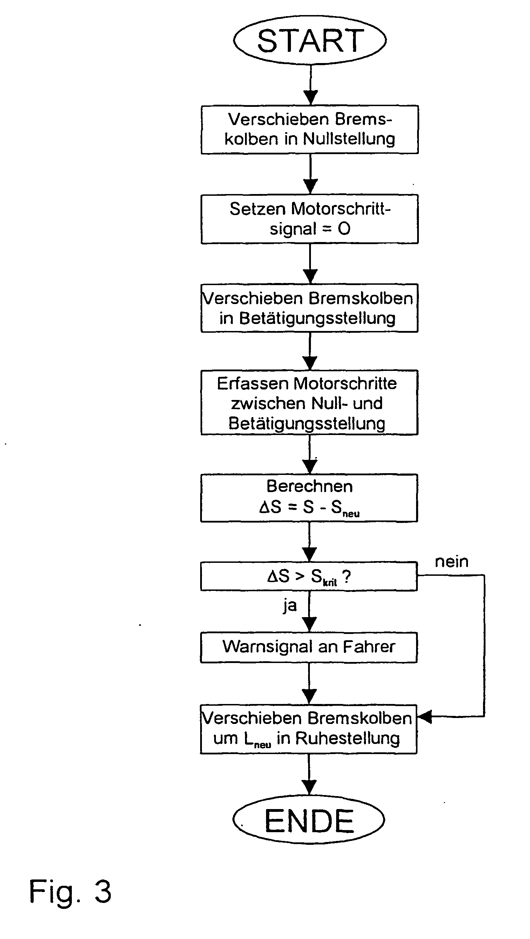

Mit Bezugnahme auf das in Fig. 3 dargestellte Flussdiagramm wird im folgenden der Ablauf eines Kalibrierungsverfahrens zur Nachregulierung des durch den Reibbelagverschleiß vergrößerten Bremslüftspiels $L_{alt}$ sowie zur Ermittlung des Reibebelagverschleißes beschrieben.

In einem ersten Schritt erfolgt zunächst die Bestimmung des gewünschten Bremslüftspiels $L_{neu}$ bevor in einem nächsten Schritt die Erfassung einer ersten oder einer zweiten Betriebsbedingung erforderlich ist. Die erste Betriebsbedingung ist erfüllt, wenn das Fahrzeug seit der letzten Kalibrierung der Bremse eine Strecke von 500 km zurückgelegt hat. Die zweite Betriebsbedingung ist erfüllt, wenn der Klemmkraftgradient dF/dt einen in dem Speicher M der elektronischen Steuereinheit ECU gespeicherten Wert $dF/dt_{krit}$ überschreitet. Bei dem gezeigten Ausführungsbeispiel wird das Verfahren immer dann fortgesetzt, wenn entweder die erste oder die zweite Betriebsbedingung erfüllt ist.

Vor dem Start der Kalibrierungsschritte ist in einem anschließenden Verfahrensschritt die Erfassung einer Reihe von weiteren Betriebsbedingungen erforderlich. Eine Fortsetzung des Verfahrens erfolgt nur dann, wenn die Zündung des Fahrzeugs ausgeschaltet ist, wenn sich das Fahrzeug im Stillstand befindet und wenn sich das Fahrzeug in der Ebene befindet. Die für die Abfrage der Betriebsbedingungen erforderlichen Betriebsparameter des Fahrzeugs werden der elektronischen Steuereinheit ECU durch die Sensoren S1...Sn bereitgestellt.

Wenn alle erforderlichen Betriebsbedingungen erfüllt sind, wird der Elektromotor 20 von der elektronischen Steuereinheit ECU derart angesteuert, dass der Bremskolben 30 in der Fig. 2 nach links in eine Nullstellung verschoben wird, bis eine Stimfläche 38 des Bremskolbens 30 mit einer Stirnfläche 40 des Kranzes 28 fluchtet. Wenn der Bremskolben 30 die Nullstellung erreicht hat, wird das von dem Sensor 32 übermittelte Signal zur Erfassung der Motorschritte in der elektronischen Steuereinheit ECU auf den Wert Null gesetzt.

Anschließend wird der Bremskolben 30 in der Fig. 2 nach rechts in eine Betätigungsstellung verschoben, in der die Reibbeläge 14, 14' das Bremslüftspiel $L_{alt}$ überwunden haben und (gerade) an der Bremsscheibe 16 anliegen. Die Bestimmung dieser Betätigungsstellung wird im folgenden näher erläutert.

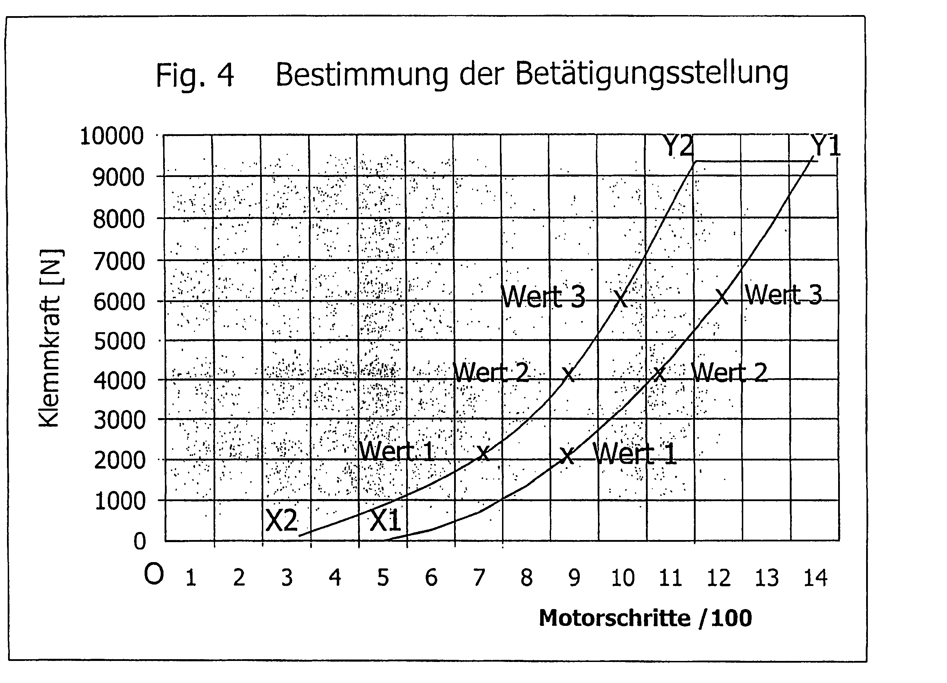

Der funktionelle Zusammenhang zwischen der von der Fahrzeugbremse ausgeübten Klemmkraft F und dem dafür eingesetzten Strom bzw. den ausgeführten Motorschritten des Elektromotors 20 beim Zustellen der Bremsbeläge 14, 14' an der Bremsscheibe 16 ist in Fig. 4 veranschaulicht. Dabei beginnt die Klemmkraft/Motorschritt-Kennlinie im Ursprung "O". Ausgehend von dem Ursprung "O" führt der Elektromotor 20 Motorschritte aus, bis die Bremsbeläge 14, 14' an der Bremsscheibe 16 anliegen. Bei dem Punkt "X1" haben die Bremsbeläge 14, 14' das Bremslüftspiel überwunden und liegen an der Bremsscheibe 16 an. Ab dem Punkt "X1" nimmt die Klemmkraft F bei weiteren Motorschritten zu, bis die maximale Zuspannkraft im Punkt "Y1" erreicht ist.

Für einen zuverlässigen Kalibrierungsvorgang ist es eine wesentliche Voraussetzung, den genauen Wert des Punktes "X1" zu kennen, bei dem die Bremsbeläge 14, 14' das Bremslüftspiel überwunden haben und an der Bremsscheibe 16 anliegen. Da jedoch zur Messung der Klemmkräfte eingesetzte Kraftsensoren einen sehr großen Messbereich abdecken müssen, sind zumindest preiswerte Kraftsensoren in der Regel für niedrige Kraftwerte sehr unempfindlich. Daher ist es nur schwer möglich, den Punkt "X1" mittels des Kraftsensors 36 direkt zu bestimmen. Messungen haben ergeben, dass die Klemmkraft/Motorschritt-Kennlinie bzw. Klemmkraft/Stromaufnahme-Kennlinie eine im wesentlichen parabolische Gestalt ($y = ax^2 + bx + c$; Gleichung 1) hat.

Um den Punkt "X1" genauer zu bestimmen als dies mit einer direkten Kraftmessung möglich wäre, wird der Umstand ausgenutzt, dass die Kraftsensoren bei höheren Kraftwerten genauere Ergebnisse liefern. Zur Ermittlung des Punktes "X1" wird daher der Elektromotor 20 so bestromt, dass der Bremskolben 30 die Bremsbeläge 14, 14' an die Bremsscheibe 16 anlegt und eine ansteigende Klemmkraft ausübt.

Bei mehreren, genauer gesagt bei drei vorherbestimmten durch den Kraftsensor 36 erfaßten Kraftwerten (2 Kilo-Newton, 4 Kilo-Newton und 6 Kilo-Newton) werden die zugehörigen Motorschritte (oder die Zeit der Motoraktivität) erfasst und abgespeichert. Anschließend werden mittels eines Näherungsverfahrens (zum Beispiel Lagrangesche Interpolation) aus diesen drei Wertepaaren ($x_1$, $y_1$; $x_2$, $y_2$; $x_3$, $y_3$) die Parameter a, b und c der obigen Gleichung 1 bestimmt. Dies kann auch mittels des Gauß-Algorithmus erfolgen, in dem die drei Wertepaare in folgendes zu lösende Gleichungssystem (Gleichung 2) eingeführt werden:

$$ax_1^2 + bx_1 + c = y_1$$

$$ax_2^2 + bx_2 + c = y_2$$

$$ax_3^2 + bx_3 + c = y_3$$

Basierend auf diesen drei Parametern können durch die elektronische Steuereinheit (ECU) dann in einem weiteren Bearbeitungsabschnitt die Nullstellen der Funktion bestimmt werden ($x_{1/2} = (-b \pm (b^2 - 4ac)^2)^{1/2}/2a$; Gleichung 3). Von diesen beiden Nullstellen wird dann diejenige ermittelt, welche den Nulldurchgang des ansteigenden Parabel-Astes bezeichnet (da der Parameter a positiv ist, ist es der Nulldurchgang mit dem größeren Wert, also der sich weiter rechts auf der X-Achse befindliche Nulldurchgang). Dieser Punkt wird als Punkt "X1" abgespeichert.

Um die aus dem Hystereseverhalten infolge der beim Lösen der Bremse freiwerdenden Rückstellkräfte und der Elastizität der Reibbeläge 14, 14' resultierende Verschiebung der Kennlinie bzw. der Betätigungsstellung zu berücksichtigen, wird ausgehend von einer Position Y1, an der die Reibbeläge 14, 14' die Bremsscheibe 16 der Bremse festsetzen, die Bestromung des Elektromotors 20 soweit zurückgenommen, dass sich die Klemmkraft F verringert bzw. sich ein abfallender Klemmkraftverlauf bis zum Punkt X2 ergibt. In analoger Weise wie bei dem ansteigenden Klemmkraftverlauf werden auch beim abfallenden Klemmkraftverlauf zu vorbestimmten Kraftwerten die zugehörigen Motorschritte erfasst und abgespeichert.

Aus den beiden Punkten X1 und X2 kann ein gemeinsamer Mittelwert gebildet werden, der als Betätigungsstellung des Bremskolbens 30 abgespeichert und dem weiteren Kalibrierungsverfahren zugrunde gelegt wird.

Mittels des Sensors 32 kann dann die Anzahl der Motorschritte S erfasst und an die elektronische Steuereinheit ECU übermittelt werden, die zur Verschiebung des Bremskolbens 30 von seiner Nullstellung in seine Betätigungsstellung erforderlich ist Anschließend vergleicht die elektronische Steuereinheit ECU den von dem Sensor 32 erfassten Wert S der Anzahl der Motorschritte mit einem in dem Speicher M abgelegten Referenzwert $S_{neu}$, der einem Wert bei einer mit neuen Reibbelägen 14, 14' ausgestatteten Bremse entspricht Die Differenz $\Delta S$ zwischen dem gemessenen Wert S und dem gespeicherten Referenzwert $S_{neu}$ stellt ein Maß für den Verschleiß der Reibbeläge 14, 14' dar.

Nachfolgend vergleicht die elektronische Steuereinheit ECU den Wert $\Delta S$ mit einem ebenfalls in dem Speicher M abgelegten Wert $S_{krit}$ und gibt ein Warnsignal an den Fahrer aus, falls der Wert $\Delta S$ den gespeicherten Wert $S_{krit}$ überschreitet. Der Wert $S_{krit}$ repräsentiert einen kritischen Verschleißwert der Reibbeläge 14, 14', bei dem ein Wechsel der Reibbeläge 14, 14' erfolgen sollte.

In einem letzten Schritt wird der Bremskolben 30 in der Fig. 2 nach links aus der Betätigungsstellung in eine Ruhestellung verschoben. Der dabei von dem Bremskolben 30 zurückgelegte Weg entspricht dem Bremslüftspiel $L_{neu}$ bei der mit neuen Reibbelägen 14, 14' versehenen Bremse. Die Kalibrierung der Bremse ist damit abgeschlossen.

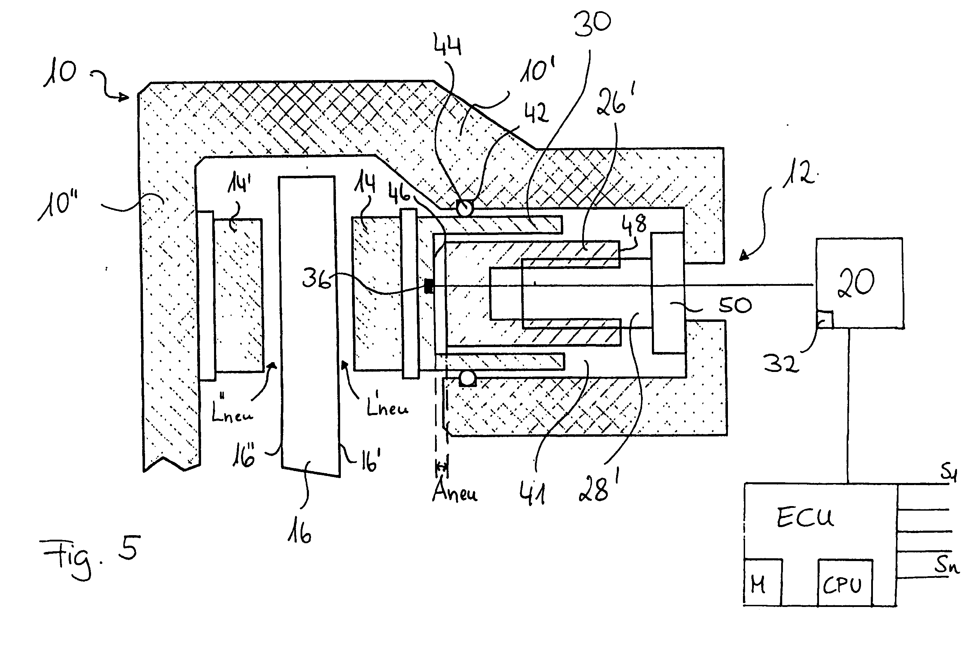

Fig. 5 zeigt eine weitere elektrisch betätigbare Kraftfahrzeug-Scheibenbremse, mit einem im Querschnitt im wesentlichen U-förmigen Bremssattel 10, einem als Hohlkolben ausgeführten Bremskolben 30 sowie einer elektrischen Betätigungseinheit 12. Wie die in den Fig. 1 und 2 gezeigte Anordnung ist auch diese Scheibenbremse als Schwimmsattelanordnung ausgebildet, so dass einer der Reibbeläge 14 durch den Bremskolben 30 direkt und der andere Reibbelag 14' durch die Wirkung der vom Bremssattel 10 aufgebrachten Reaktionskraft mit der Bremsscheibe 16 in Reibungseingriff bringbar ist. Die Betätigungseinheit 12 weist einen nicht näher veranschaulichten Elektromotor 20 sowie ein nach Art einer Mutter/Spindelanordnung arbeitendes Getriebe 26', 28' auf. Darüber hinaus ist der Bremskolben 30 mittels eines Hydraulikdrucks betätigbar, der aus einem nicht gezeigten Hydraulikfluidbehälter in eine Hydraulikkammer 41 einleitbar ist. Die gezeigte Scheibenbremse ist somit sowohl hydraulisch als auch elektromotorisch betätigbar.

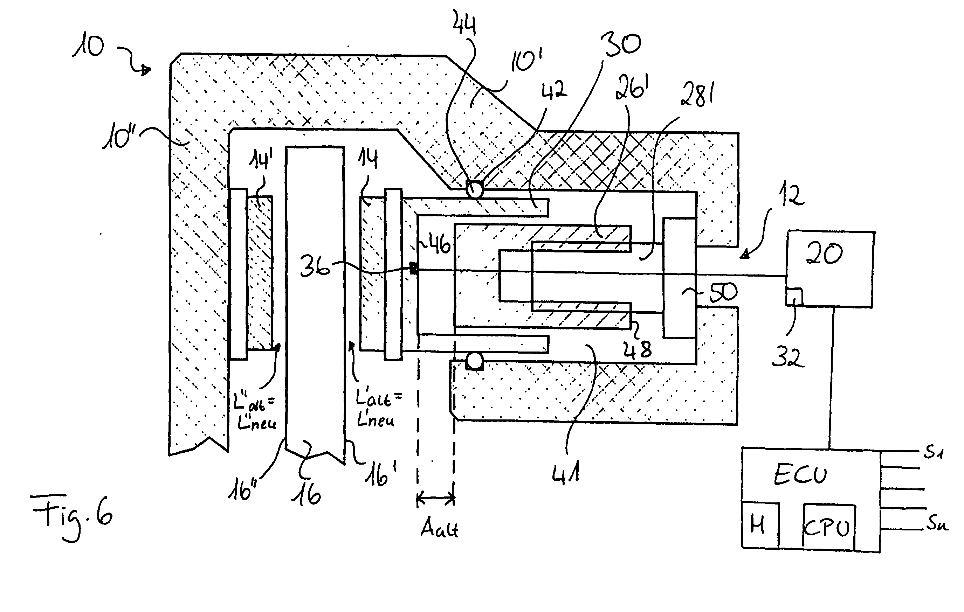

In einer in dem Bremssattel 10 ausgebildeten Nut 42 ist eine "Rollback"-Dichtung 44 angeordnet, die die Ruhestellung des Bremskolbens 30 so festlegt, dass das Bremslüftspiel unabhängig vom Reibbelagverschleiß auf einem konstanten Wert gehalten wird. Demnach ist Bremslüftspiel $L_{alt}$ bei einer in der Fig. 6 gezeigten, mit verschlissenen Reibbelägen 14, 14' ausgestatteten Bremse genauso groß wie das Bremslüftspiel $L_{neu}$ bei der in der Fig. 5 gezeigten, mit neuen Reibbelägen 14, 14' versehenen Bremse. Durch die Verschiebung der Ruhestellung des Bremskolbens 30 zur Kompensation des Reibbelagverschleißert vergrößert sich jedoch ein bei nicht betätigter Bremse vorhandener Abstand zwischen der auf den Bremskolben 30 wirkenden Mutter 26' der Mutter/Spindelanordung 26', 28' und dem Boden 46 des Bremskolbens 30 von einem Wert $A_{neu}$ bei einer mit neuen Reibbelägen 14, 14' versehenen Bremse auf einen Wert $A_{alt}$ bei einer mit verschlissenen Reibbelägen 14, 14' ausgestatteten Bremse.

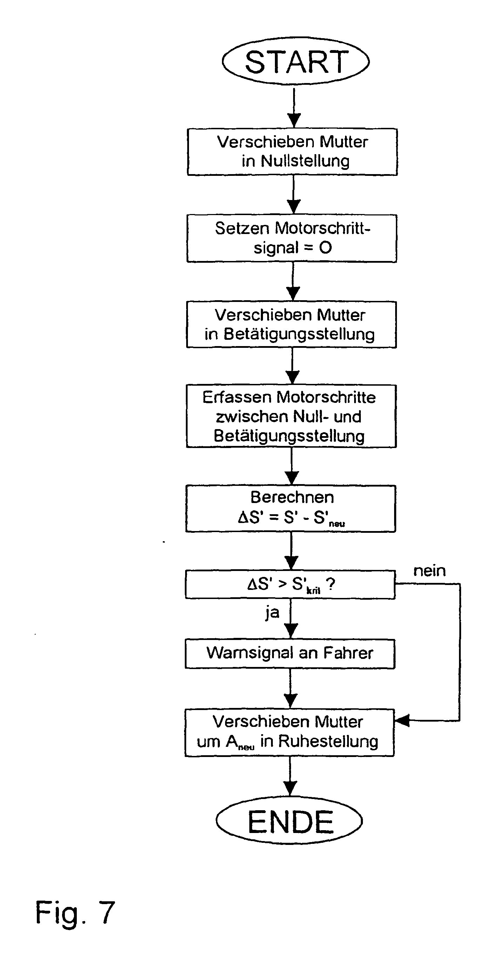

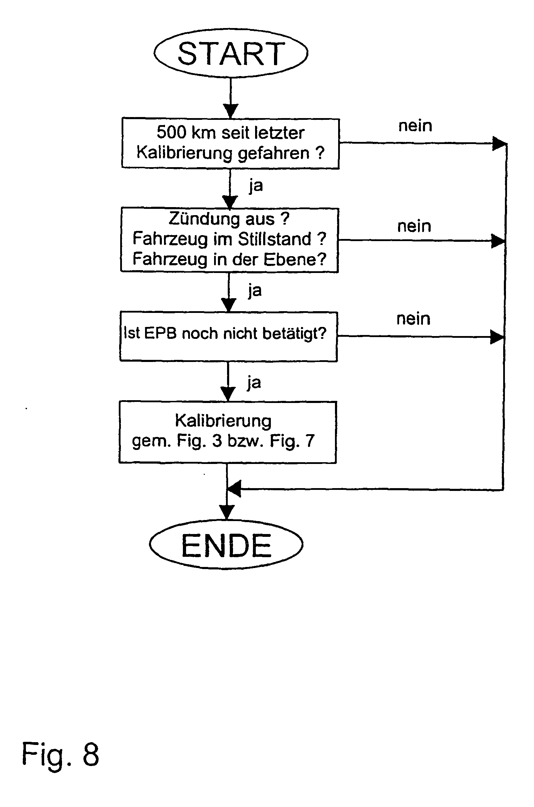

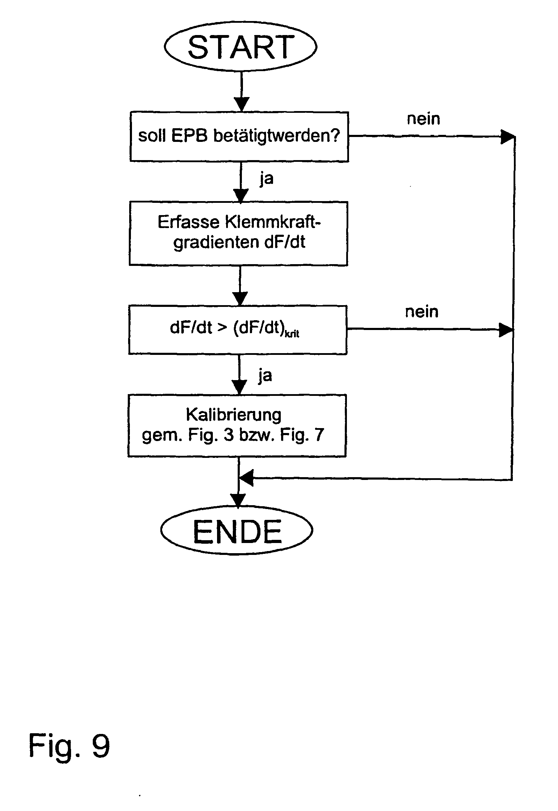

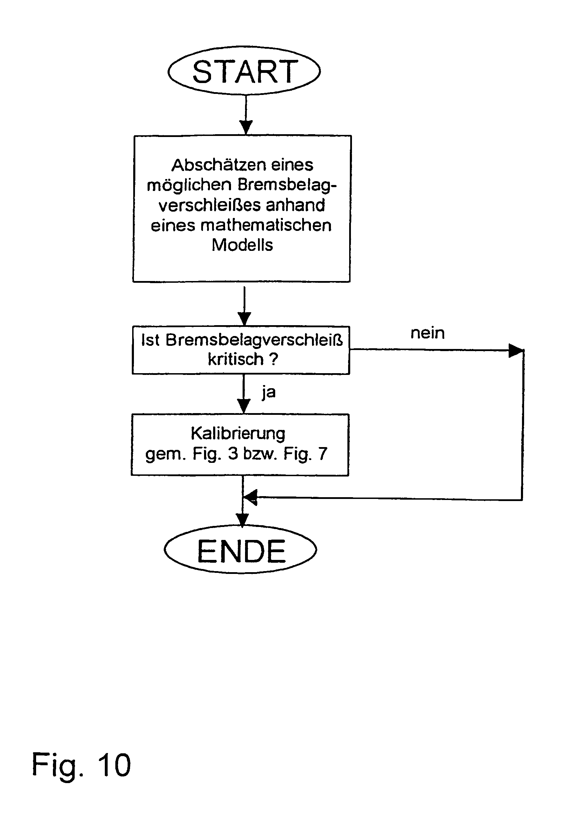

Mit Bezugnahme auf das in Fig. 7 dargestellte Hussdiagramm wird im folgenden der Ablauf eines Kalibriervngsverfahrens zur Nachregulierung des durch den Reibbelagverschleiß vergrößerten Abstands $A_{alt}$ zwischen der Mutter 26' und dem Kolbenboden 46 sowie zur Ermittlung des Reibbelagverschleißes beschrieben.

In einem ersten Schritt erfolgt zunächst die Bestimmung des gewünschten Abstand $A_{neu}$, bevor, wie bereits bei dem im Zusammenhang mit Fig. 3 beschriebenen Kalibrierungsverfahren erläutert, die Erfassung einer ersten oder einer zweiten Betriebsbedingung erforderlich ist. Die erste Betriebsbedingung ist erfüllt, wenn das Fahrzeug seit der letzten Kalibrierung der Bremse eine Strecke von 500 km zurückgelegt hat. Die zweite Betriebsbedingung ist erfüllt, wenn der Klemmkraftgradient dF/dt einen in dem Speicher M der elektronischen Steuereinheit ECU gespeicherten Wert $dF/dt_{krit}$ überschreitet.

Vor dem Start der Kalbirierungsschritte ist in einem anschließenden Verfahrensschritt die Erfassung einer Reihe von weiteren Betriebsbedingungen erforderlich. Eine Fortsetzung des Verfahrens erfolgt nur dann, wenn die Zündung des Fahrzeugs ausgeschaltet ist, wenn sich das Fahrzeug im Stillstand befindet und wenn sich das Fahrzeug in der Ebene befindet. Die für die Abfrage der Betriebsbedingungen erforderlichen Betriebsparameter des Fahrzeugs werden der elektronischen Steuereinheit ECU wiederum durch die Sensoren S1...Sn bereitgestellt.

Wenn alle erforderlichen Betriebsbedingungen erfüllt sind, wird der Elektromotor 20 von der elektronischen Steuereinheit ECU derart angesteuert, dass die Mutter 26' der Mutter/Spindelanordnung 26', 28' in der Fig. 6 nach rechts in eine Nullstellung verschoben wird, bis eine Stimfläche 48 der Mutter 26' in Anlage an einen Anschlag 50 gerät. Wenn die Mutter 26' die Nullstellung erreicht hat, wird das von dem Sensor 32 übermittelte Signal zur Erfassung der Schritte des Elektromotors 20 in der elektronischen Steuereinheit ECU auf den Wert Null gesetzt

Anschließend wird die Mutter 26' in der Fig. 6 nach links in eine Betätigungsstellung verschoben, in der der von der Mutter 26' betätigte Bremskolben 30 die Reibbeläge 14, 14' (gerade) an die Bremsscheibe 16 anlegt. Die Bestimmung dieser Betätigungsstellung des Bremskolbens 30 erfolgt, wie bereits im Zusammenhang mit den Fig. 3 und 4 beschrieben wurde.

Mittels des Sensors 32 kann dann die Anzahl der Motorschritte S' erfasst und an die elektronische Steuereinheit ECU übermittelt werden, die zur Verschiebung der Mutter 26' von ihrer Nullstellung in ihre Betätigungsstellung erforderlich ist. Anschließend vergleicht die elektronische Steuereinheit ECU den von dem Sensor 32 erfassten Wert S' der Anzahl der Motorschritte mit einem in dem Speicher M der elektronischen Steuereinheit ECU abgelegten Referenzwert $S'_{neu}$, der einem Wert bei einer mit neuen Reibbelägen 14, 14' ausgestatteten Bremse entspricht Die Differenz $\Delta S'$ zwischen dem gemessenen Wert S' und dem gespeicherten Referenzwert $S'_{neu}$ stellt ein Maß für den Verschleiß der Reibbeläge 14, 14' dar.

Nachfolgend vergleicht die elektronische Steuereinheit ECU den Wert $\Delta S'$ mit einem ebenfalls in dem Speicher M abgelegten Wert S'$_{krit}$ und gibt ein Warnsignal an den Fahrer aus, falls der Wert ΔS' den gespeicherten Wert S'$_{krit}$ überschreitet. Der Wert S'$_{krit}$ repräsentiert einen kritischen Verschleißwert der Reibbeläge 14, 14', bei dem ein Wechsel der Reibbeläge 14, 14' erfolgen sollte.

In einem letzten Schritt wird die Mutter 26' in der Fig. 6 nach rechts aus der Betätigungsstellung in eine Ruhestellung verschoben. Zu Beginn Verschiebung der Mutter 26' verschiebt sich der Bremskolben 30 gemeinsam mit der Mutter 26' nach rechts, bis der Bremskolben 30 das Bremslüftspiel L$_{neu}$ überwunden hat und durch die "Rollback"-Dichtung 44 in dieser Position festgelegt wird. Bei einer weiteren Verschiebung nach rechts löst sich die Mutter 26' von ihrer Anlage am Kolbenboden 46 und erreicht schließlich ihre Ruhestellung, in der der Abstand zwischen der Mutter 26' und dem Kolbenboden 46 gleich dem Wert A$_{neu}$ bei einer mit neuen Reibbelägen 14, 14' ausgestatteten Bremse ist. Der während ihrer Verschiebung nach rechts von der Mutter 26' zurückgelegte Weg entspricht somit der Summe aus dem Bremslüftspiel L$_{neu}$ und dem Abstand zwischen der Mutter 26' und dem Kolbenboden 46 gleich dem Wert A$_{neu}$ bei einer mit neuen Reibbelägen 14, 14' ausgestatteten Bremse.

In den Figuren 8 bis 10 sind drei verschiedene Ausführungsbeispiele eines Verfahrens zur Abfrage von Betriebsbedingungen vor der Durchführung des Kalibrierungsverfahrens gemäß Fig. 3 bzw. Fig. 7 dargestellt. Die für die Abfrage der Betriebsbedingungen erforderlichen Betriebsparameter des Fahrzeugs werden der elektronischen Steuereinheit ECU durch die Sensoren S1...Sn bereitgestellt.

Gemäß Fig. 8 ist eine erste Betriebsbedingung erfüllt, wenn das Fahrzeug seit der letzten Kalibrierung der Bremse eine Strecke von 500 km zurückgelegt hat. Eine zweite Betriebsbedingung ist erfüllt, wenn die Zündung des Fahrzeugs ausgeschaltet ist, wenn sich das Fahrzeug im Stillstand befindet und wenn sich das Fahrzeug in der Ebene befindet. Im Rahmen der Abfrage einer dritten Betriebsbedingung wird ermittelt, ob ein Betätigungswunsch für eine elektronische Parkbremse (EPB) noch nicht vorliegt, d.h. daß die Bremse noch nicht zugesperrt ist. Bei dem gezeigten Ausführungsbeispiel erfolgt eine Kalibrierung der Bremse nur dann, wenn alle drei Betriebsbedingungen erfüllt sind.

Bei dem in Fig. 9 dargestellten Ausführungsbeispiel eines Verfahrens zur Abfrage von Betriebsbedingungen wird in einem ersten Schritt ermittelt, ob eine elektronische Parkbremse (EPB) betätigt ist. Wenn die erste Betriebsbedingung erfüllt ist, wird in einem zweiten Schritt der Klemmkraftgradient dF/dt erfasst. Anschließend wird als zweite Betriebsbedingung überprüft, ob der Klemmkraftgradient dF/dt einen in dem Speicher M der elektronischen Steuereinheit ECU gespeicherten Wert dF/dt$_{krit}$ überschreitet. Ähnlich wie bei dem in der Fig. 8 gezeigten Ausführungsbeispiel wird auch hier nur dann eine Kalibrierung der Bremse durchgeführt, wenn beide Betriebsbedingungen erfüllt sind.

Gemäß Fig. 10 wird in einem ersten Schritt zunächst ein möglicher Bremsbelagverschleiß anhand eines mathematischen Modells abgeschätzt. Anschließend wird geprüft, ob dieser abgeschätzte Bremsbelagverschleiß kritisch ist Dies kann beispielsweise durch einen Vergleich des geschätzten (Temperatur-)Wertes mit einem in dem Speicher M der elektronischen Steuereinheit ECU gespeicherten Wert erfolgen. Nur wenn der abgeschätzte Bremsbelagverschleiß kritisch ist, erfolgt schließlich eine Kalibrierung der Bremse gemäß dem in der Fig. 3 bzw. der Fig.7 dargestellten Verfahren.

Im Folgenden werden bevorzugte Ausführungsformen am Beispiel eines Kraftfahrzeuges mit einer elektronischen Steuereinheit und einem elektronisch und durch einen Fahrzeugführer steuerbaren Fahrzeugbremssystem erläutert. Ferner werden Temperaturbestimmungen für eine Bremsfläche einer Radbremse des Fahrzeugbremssystems beschrieben, wobei es vorgesehen ist, Bremsflächentemperaturbestimmungen auf diese Weise für mehrere oder alle Bremsflächen des Fahrzeugs durchzuführen.

Zur Durchführung von Temperaturbestimmungen einzelner oder mehrerer Bremsflächen ist eine Einrichtung vorhanden, die eingerichtet und programmiert ist, einzelne, mehrere oder alle im Folgenden beschriebenen zur Bremsflächentemperaturbestimmung notwendigen Schritte durchzuführen. Des Weiteren ist eine Speichereinrichtung vorgesehen, die der Temperaturbestimmungseinrichtung zugeordnet ist und, beispielsweise wie im Folgenden erläutert, Kennfelder speichert. Die Speichereinrichtung kann auch dem Fahrzeugbremssystem und/ oder der Fahrzeugsteuereinheit ECU zugeordnet sein. Auch kann es vorgesehen sein, dass einzelne, mehrere oder alle Komponenten baueinheitlich integriert sind.

Grundsätzlich wird beim Verzögern oder Beschleunigen des Fahrzeugs ein konstanter Anteil der Änderung dessen kinetischer Energie den Bremsen und insbesondere den Bremsflächen des Fahrzeugbremssystems zugeführt, wenn dieses beim Verzögern oder Beschleunigen aktiviert ist Somit lässt sich die einer Bremsfläche zugeführte thermische Energie W$_{therm,b}$ in Abhängigkeit einer Änderung der kinetischen Energie des Fahrzeugs ΔW$_{kin,v}$ wie folgt darstellen:

$$W_{therm,d} = \Delta W_{kin,v} * k_r$$

wobei k ein fahrzeugspezifischer und insbesondere ein für das Fahrzeugbremssystem spezifischer Faktor ist, der zwischen Null und Eins liegt und den als thermische Energie zugeführten Energieanteil charakterisiert.

Zur Berechnung der Änderung der kinetischen Energie des Fahrzeugs wird als Ausgangswert die kinetische Energie zugrunde gelegt, die sich aus der Masse der Fahrzeugs und der Fahrzeuggeschwindigkeit ergibt, mit der sich das Fahrzeug zu Beginn der Verzögerung oder der Beschleunigung bewegt Im Fall einer Verzögerung des Fahrzeuges, d.h. beim Beginn eines Bremsvorgangs, wird die Geschwindigkeit des Fahrzeugs zu einem Zeitpunkt ermittelt, der im Wesentlichen mit der Aktivierung des Fahrzeugbremssystems zusammenfällt Im Gegensatz dazu ist es im Fall einer Fahrzeugbeschleunigung möglich, dass der Zeitpunkt, an dem die Fahrzeuggeschwindigkeit ermittelt wird, vor oder nach einer Aktivierung des Fahrzeugbremssystems liegt, wenn das Fahrzeugbremssystem beim Beschleunigen schon bzw. noch aktiviert ist bzw. erst während des Beschleunigungsvorgangs aktiviert wird.

Die als Ausgangswert zugrunde gelegte kinetische Energie $W_{kin, start}$ des Fahrzeugs mit einer Masse m und der, wie oben beschrieben ermittelten, zu Beginn des Bremsvorganges vorliegenden Geschwindigkeit $V_{start}$ kann wie folgt berechnet werden:

$$W_{kin,start} = 0,5 * m * v^2_{start}.$$

Zur Berechnung der kinetischen Energie des Fahrzeugs am Ende des Messzeitraums, der im Allgemeinen mit der Beendigung der Aktivierung des Fahrzeugbremssystems endet oder, wenn für eine Aktivierung des Fahrzeugbremssystems mehrer Messzeiträume verwendet werden, in dem Zeitraum liegt, in dem das Fahrzeugbremssystem aktiviert ist, wird die Fahrzeugverzögerung oder -beschleunigung für den Messzeitraum und die Dauer desselben ermittelt. Die am Ende des Messzeitraums vorliegende kinetische Energie $W_{kin,b}$ des Fahrzeugs kann dann wie folgt berechnet werden:

$$\overline{W}_{kin,b} = 0,5 * \overline{a}^2_b * \overline{t}^2_b,$$

wobei $a_b$ die Verzögerung oder Beschleunigung des Kraftfahrzeugs und $t_b$ die Dauer des Messzeitraums charakterisieren.

Aus diesen Werten für die kinetische Energie des Fahrzeugs kann die Änderung der kinetischen Energie und daraus die der Bremsfläche zugeführte thermische Energie $W_{therm,b}$ berechnet werden:

$$W_{therm,b} = 0,5 * k * m * (v^2_{start} + a^2_b * t^2_b),$$

wobei ein negativer Wert für $a_b$ eine Fahrzeugverzögerung und ein positiver Wert für $a_b$ eine Fahrzeugbeschleunigung angeben.

Zur Ermittlung der Fahrzeugverzögerung oder -beschleunigung $a_b$ kann auf Einrichtungen (z.B. Verzögerungssensoren) des Fahrzeugbremssystems und/oder auf Daten der Fahrzeugsteuerung, die beispielsweise die Drehzahlen der Räder angeben, zurückgegriffen werden.

Da die Bremsfläche beim Betrieb des Fahrzeugs nicht nur thermische Energie aufgrund einer Aktivierung des Fahrzeugbremssystems erhält, sondern auch durch andere thermische Quellen erwärmt und aufgrund des Fahrzeugbetriebs und/oder aktiver Kühlvorrichtungen gekühlt wird, werden entsprechende Korrekturgrößen verwendet, die für eine genauere Bestimmung der Bremsflächentemperatur sorgen. Die aufgrund des Fahrzeugbetriebs erzeugte Abkühlenergie $W_{therm,c}$ die in erster Linie eine Kühlung aufgrund des durch die Fahrzeuggeschwindigkeit entstehenden Fahrtwindes darstellt, ist eine Funktion der Fahrzeuggeschwindigkeit. Da Fahrzeuge üblicherweise nicht mit Sensoren ausgestattet sind, die die kühlende Wirkung des Fahrtwindes erfassen, werden, wenn nicht entsprechende zusätzliche Sensoren vorgesehen sind, von der Fahrzeuggeschwindigkeit abhängige Kennfelder verwendet werden, die unterschiedlichen Fahrzeuggeschwindigkeiten entsprechende für die Bremsfläche wirksame Abkühlenergien $W_{therm,c}$ zuordnen. Diese Kennfelder sind der Fahrzeugsteuerung und/oder dem Fahrzeugbremssystem zugeordnet oder in einer Speichereinrichtung derselben gespeichert. Zur Berechnung der aktuellen Abkühlenergie $W_{therm,c}$ wird für die aktuelle Fahrzeuggeschwindigkeit ein entsprechender Wert aus den Kennfeldern ausgelesen. Hierbei können auch Interpolationverfahren verwendet werden, wenn für die aktuelle Fahrzeuggeschwindigkeit kein entsprechender Wert zur Verfügung steht.

Befindet sich das Fahrzeug im Stillstand (Fahrzeuggeschwindigkeit = 0) kann die Abkühlenergie $W_{therm,c}$ in Abhängigkeit einer Funktion ermittelt werden, die den Ankühlverlauf für das Fahrzeugbremssystem und insbesondere für die Bremsfläche im Stillstand, d.h. im Wesentlichen ohne weitere Faktoren, die für eine Abkühlung sorgen, charakterisiert. Hierbei kann berücksichtigt werden, ob das Fahrzeugbremssystem beim Stillstand des Fahrzeugs vollständig, teilweise oder überhaupt nicht aktiviert ist, d.h. ob an der Bremsfläche Kräfte wirken oder nicht. Dies ist beispielsweise zu berücksichtigen, wenn das Fahrzeugbremssystem als Feststellbremse oder Parkbremse arbeitet, bei denen das Fahrzeug im Stillstand gehalten wird, indem auf die Bremsflächen wirkende Kräfte erzeugt werden. Im einfachsten Fall wird eine lineare Funktion verwendet, die die Abgabe thermischer Energie von der Bremsfläche in Abhängigkeit der Zeit angibt.

In Abhängigkeit des Abbaus des Fahrzeugs und des Fahrzeugbremssystems insbesondere der Radbremsen bzw. der Anordnung der Bremsflächen können sich die Bremsflächen aufgrund thermischer Energie erwärmen, die von anderen Wärmequellen stammt. Dies ist beispielsweise der Fall, wenn die Bremsfläche in der Nähe des Fahrzeugmotors oder anderer Wärmeabstrahlender Komponenten, wie z.B. der Abgasanlage des Fahrzeugs, angeordnet ist und/oder das Fahrzeugbremssystem Aktuatoren, Elektromotoren und dergleichen umfasst, die sich in der Nähe der Bremsfläche befinden.

Somit kann die thermische Energie $W_{therm,b}$ der Bremsfläche wie folgt berechnet werden:

$$W_{therm,b} = 0{,}5 * k * m \, (v^2_{start} + a^2_b * t^2_b) - W_{therm,c} + W_{therm,h}.$$

Aus der thermischen Energie $W_{therm,b}$, die der Bremsfläche wirksam zugeführt ist, wird dann unter Berücksichtigung thermischer Charakteristika der Bremsfläche deren Temperatur ermittelt.

Bewegt sich in das Fahrzeug mit einer konstanten Geschwindigkeit und ist dabei das Fahrzeugbremssystem nicht aktiviert, werden bei der Berechnung der Bremsflächentemperatur (en) beweglich die thermischen Energien $W_{therm,c}$ und $W_{therm,h}$ berücksichtigt.

Ferner gibt es Betriebszustände, in denen das Fahrzeug keine Geschwindigkeitsänderung erfährt, d.h. sich im Stillstand befindet oder mit gleichmäßiger Geschwindigkeit bewegt wird, und dabei das Fahrzeugbremssystem wenigstens kurzfristig für eine, mehrere oder alle Räder aktiviert ist Dies ist beispielsweise der Fall, wenn sich das Fahrzeug auf einer geneigten Fahrbahn befindet oder bewegt und der Stillstandszustand oder eine gewünschte konstante Geschwindigkeit beibehalten wird, indem das Fahrzeugbremssystem durch Betätigung seitens eines Fahrzeugführers und/oder gesteuert Bremskräfte erzeugt. Weitere Beispiele hierfür sind Fahrzustände des Fahrzeugs, in denen das Fahrzeugbremssystem durch eine eigene Steuerung und/oder durch die Fahrzeugsteuerung gesteuert so aktiviert wird, dass Funktionen eines Antiblockiersystems, einer Traktionskontrolle, eines elektronischen Stabilitätsprogrammes, einer Antischlupfregelung und dergleichen bereitgestellt werden.

Da jede Aktivierung des Fahrzeugbremssystems zu einer Änderung der Temperaturen der Bremsflächen führt, können für eine genauere Bestimmung der Bremsflächentemperaturen auch solche Fahrzustände berücksichtigt werden. Der zugrunde liegende Ansatz, zur Bremsflächentemperaturbestimmung für das Fahrzeug wirksame Verzögerungen und Beschleunigungen zu verwenden, findet auch hier Anwendung. Die eingangs verwendeten Verzögerungs- und beschleunigungsvorgänge führen zu einer Änderung der Fahrzeuggeschwindigkeit, d.h. sie stellen Fahrzeugverzögerungen und - beschleunigungen dar. Hier werden nun Verzögerungen und Beschleunigungen zugrunde gelegt, die nicht die Fahrzeuggeschwindigkeit betreffen, sondern Verzögerungen und Beschleunigungen die an den einzelnen Rädern wirken.

Hierfür werden beispielsweise unter Verwendung der Fahrzeugsteuerung an den Rädern, an denen das Fahrzeugbremssystem Bremskräfte erzeugt, Verzögerungen oder Beschleunigungen sowie die Zeit ermittelt, während der Bremskräfte wirken. Daraus kann die Änderung der kinetischen Energie eines Rades, an dem Bremskräfte wirken, und basierend darauf die dem Rad zugeführte thermische Energie ermittelt werden. Um die Änderung der kinetischen Energie eines Rades zu bestimmen, kann, vergleichbar zu den bisherigen Ausführungen, als Ausgangswert die kinetische Energie des Rades, die sich aus der Winkelgeschwindigkeit des Rades ergibt, und/oder eine zuvor ermittelte kinetische Energie zugrunde gelegt werden, die sich aus der jeweiligen Verzögerung bzw. Beschleunigung ergibt.

Ferner ist es hier möglich, die einer Bremsfläche zugeführte thermische Energie zu ermitteln, indem die an den Rädern wirkenden Bremskräfte erfasst oder ermittelt werden, um in Verbindung mit den an den Rädern wirkenden Verzögerungen bzw. Beschleunigungen und den entsprechenden Zeiträumen, in denen Bremskräfte vorliegen, die an den Rädern verrichtete Arbeit und daraus die den jeweiligen Bremsflächen zugeführte thermische Energie zu bestimmen.

Die beiden zuletzt genannten Wege, Bremsflächentemperaturen zu bestimmen, können alternativ oder gemeinsam verwendet werden, was in letzterem Fall zu einem redundanten Verfahren führt, welches die Temperaturbestimmung verbessern kann.

Die eingangs beschriebene Temperaturbestimmung auf der Grundlage einer Fahrzeugverzögerung oder -beschleunigung ist einfacher durchzuführen, da hierfür nur eine Verzögerung bzw. Beschleunigung erfasst wird. Dementsprechend ist diese Vorgehensweise insbesondere für Fahrzeuge geeignet, bei denen die Fahrzeugsteuerung (ECU) und die Steuerung des Fahrzeugbremssystemes keine Informationen über Verzögerungen und Beschleunigungen an einzelnen Rädern liefern. Ferner stellt dies eine Lösung für Fahrzeuge dar, die keine Einrichtungen umfassen, die Informationen über an dem Fahrzeug wirkende Verzögerungen und Beschleunigungen bereitstellen. Bei solchen Fahrzeugen wäre es lediglich erforderlich, Einrichtungen, wie z.B. Rechnereinheiten, Speichereinheiten, Sensoren und dergleichen, zu ergänzen, die wenigstens eine Fahrzeugverzögerung bzw. -beschleunigung erfassen und daraus Bremsflächentemperaturen berechnen können.

Die Bestimmung von Bremsflächentemperaturen auf der Grundlage von an einzelnen Rädern wirksamen Verzögerungen und Beschleunigungen kann bei entsprechend ausgestatteten Fahrzeugen alternativ oder ergänzend zu der auf einer Fahrzeugverzögerung bzw. -beschleunigung basierenden Temperaturbestimmung für Bremsflächen eingesetzt werden.

Die Bremsflächentemperaturbestimmung auf der Grundlage einer Fahrzeugverzögerung oder -beschleunigung ist schneller durchzuführen, da nicht die einzelnen Räder überwacht werden müssen. Dies kann zu einer ungenauen Bremsflächentemperaturbestimmung führen, da hierbei davon ausgegangen wird, dass bei einer Verzögerung oder Beschleunigung des Fahrzeugs die an die Bremsflächen übertragenen thermischen Energien im wesentlichen gleich sind. Bei Fahrzeugen, bei denen dies nicht gewährleistet werden kann, oder zur Überprüfung einer solchen Temperaturbestimmung, ist die Temperaturbestimmung für Bremsflächen basierend auf an den einzelnen Rädern wirksamen Verzögerungen bzw. Beschleunigungen als alternatives bzw. redundantes Verfahren geeignet.

Ein Beispiel für die Verwendung der Bestimmung der Temperatur einer Bremsfläche ist ein Fahrzeugbremssystem, das als Feststellbremse oder Parkbremse arbeitet. Um ein Fahrzeug im Stillstand gegen Wegrollen zu sichern, ist es erforderlich, dass die Feststellbremse eine entsprechende minimale Bremswirkung erzeugt. Hierfür werden normalerweise die durch die Feststellbremse auf die Bremsflächen wirkenden Kräfte, im Folgenden kurz Zuspannkräfte, auf einen gewünschten, vorbestimmten Wert eingestellt. Wenn sich beispielsweise nach einem längeren Fahrbetrieb des Fahrzeugs die Bremsflächen erwärmt und dadurch ausgedehnt haben, nehmen die für den ausgedehnten Zustand der Bremsflächen eingestellten Zuspannkräfte ab, wenn sich die Bremsflächen im Stillstand abkühlen. Für einen in der Praxis auftretenden Fall liegt beispielsweise die Temperatur der Bremsflächen in der Größenordnung von 700°C, wobei die Zuspannkräfte in der Größenordnung von 15 kN liegen. Nach einem Abkühlen der Bremsflächentemperatur auf ein Größenordnung von 350°C und einer damit verbundenen Verkleinerung der Bremsflächen, dem sogenannten Belagschrumpfen, liegen die Zuspannkräfte nur noch in der Größenordnung von 9 kN. Dies kann dazu führen, dass das Fahrzeug nicht mehr gegen ein Wegrollen gesichert ist. Wenn man, wie oben beschrieben, die Bremsflächentemperatur beim Abstellen des Fahrzeugs bestimmt hat, ist es dann möglich, im Stillstand des Fahrzeugs ausgehend von der beim Erreichen des Stillstands vorliegenden Bremsflächentemperatur deren Abfall zu ermitteln und dementsprechend die Zuspannkräfte zu erhöhen. Im Allgemeinen folgt der Abfall der Zuspannkräfte beim Abkühlen der Bremsflächen einer Exponentialfunktion, weshalb ein erstmaliges Erhöhen der Zuspannkraft in der Regel bereits nach einer Zeit von etwa 3 Minuten erforderlich ist.

**Patentansprüche**

1. Elektrisch betätigbare Fahrzeugbremse mit

- einem Bremskolben (30), der auf wenigstens einen Reibbelag (14, 14') wirkt und aus einer Ruhestellung in eine Betätigungsstellung verschiebbar ist, in der der Bremskolben (30) den Reibbelag (14, 14') gegen ein mit einem Rad des Kraftfahrzeuges drehfest verbindbares Drehglied (16) der Fahrzeugbremse anlegt, und
- einer von einem Elektromotor (20) angetriebenen, auf den Bremskolben (30) wirkenden Getriebeeinheit (26, 28) zum Betätigen des Bremskolbens (30), wobei
- der Elektromotor (20) durch eine elektronische Steuereinheit (ECU) anzusteuern ist, die auch dazu eingerichtet ist, Betriebsparameter des Fahrzeugs, des Elektromotors (20) und/oder der Fahrzeugbremse zu erfassen, wobei
- die elektronische Steuereinheit (ECU) dazu eingerichtet und programmiert ist, mittels eines in ihr ablaufenden Steuer- und Auswerteprogramms den Elektromotor (20) so anzusteuern, dass der Bremskolben (30) zur Kalibrierung der Bremse in Reaktion auf die Erfassung mindestens einer vorbestimmten Betriebsbedingung in eine erste Richtung in seine Betätigungsstellung verschoben wird, in der der wenigstens eine Reibbelag (14, 14') an dem Drehglied (16) anliegt, und der Bremskolben (30) anschließend um einen Weg, der einem vorbestimmten, gewünschten Bremslüftspiel ($L_{neu}$) entspricht, in eine der ersten Richtung entgegengesetzte, zweite Richtung in seine Ruhestellung verschoben wird,

**dadurch gekennzeichnet, dass** die elektronische Steuereinheit (ECU) dazu eingerichtet ist, den Elektromotor (20) so anzusteuern, dass der Bremskolben (30) vor dem Verschieben in seine Betätigungsstellung in eine vorbestimmte Nullstellung verschoben wird, und dass die elektronische Steuereinheit (ECU) ferner dazu eingerichtet ist, eine Größe (S) zu erfassen, die mit einem von dem Bremskolben (30) zwischen seiner Nullstellung und seiner Betätigungsstellung zurückgelegten Weg korreliert ist, und die erfasste Größe (S) mit einer gespeicherten Referenzgröße ($S_{neu}$) zu vergleichen, wobei die Referenzgröße ($S_{neu}$) mit einem von dem Bremskolben (30) zurückgelegten Weg bei einer mit neuen Reibbelägen (14, 14') ausgestatteten Fahrzeugbremse korreliert ist.

**2.** Elektrisch betätigbare Fahrzeugbremse nach Anspruch 1,
**dadurch gekennzeichnet, dass** die elektronische Steuereinheit (ECU) dazu eingerichtet ist, ein Warnsignal an den Fahrzeugführer auszugeben, wenn eine Differenz ($\Delta S$) zwischen der erfassten Größte (S) und der gespeicherten Referenzgröße ($S_{neu}$) einen vorbestimmten Wert ($S_{krit}$) überschreitet.

**3.** Elektrisch betätigbare Fahrzeugbremse mit

- einem Bremskolben (30), der auf wenigstens einen Reibbelag (14, 14') wirkt und aus einer Ruhestellung in eine Betätigungsstellung verschiebbar ist, in der der Bremskolben (30) den Reibbelag (14, 14') gegen ein mit einem Rad des Kraftfahrzeuges drehfest verbindbares Drehglied (16) der Fahrzeugbremse anlegt, wobei der Bremskolben (30) mittels eines auf den Bremskolben (30) wirkenden Elements (26') einer von einem Elektromotor (20) angetriebenen Getriebeeinheit (26', 28') betätigbar ist, und
- einer Einrichtung (44) zur Festlegung der Ruhestellung des Bremskolbens (30), in der ein vorbestimmtes, gewünschtes Bremslüftspiel ($L_{neu}$) konstant gehalten wird, wobei
- der Elektromotor (20) durch eine elektronische Steuereinheit (ECU) anzusteuern ist, die auch dazu eingerichtet ist, Betriebsparameter des Fahrzeugs, des Elektromotors (20) und/oder der Fahrzeugbremse zu erfassen, wobei
- die elektronische Steuereinheit (ECU) dazu eingerichtet und programmiert ist, mittels eines in ihr ablaufenden Steuer- und Auswerteprogramms den Elektromotor (20) so anzusteuern, dass das Element (26') zur Kalibrierung der Bremse in Reaktion auf die Erfassung mindestens einer vorbestimmten Betriebsbedingung in eine erste Richtung in seine Betätigungsstellung verschoben wird, in der der von dem Element (26') betätigte Bremskolben (30) den wenigstens einen Reibbelag (14, 14') an das Drehglied (16) anlegt, und das Element (26') anschließend um einen Weg, der dem vorbestimmten Bremslüftspiel ($L_{neu}$) und gegebenenfalls einem vorbestimmten Abstand zwischen dem Element (26') und dem Bremskolben (30) bei nicht betätigter Bremse entspricht, in eine der ersten Richtung entgegengesetzte zweite Richtung in seine Ruhestellung verschoben wird,

**dadurch gekennzeichnet, dass** die elektronische Steuereinheit (ECU) dazu eingerichtet ist, den Elektromotor (20) so anzusteuern, dass das auf den Bremskolben (30) wirkende Element (26') der Getriebeeinheit (26', 28') vor dem Verschieben in seine Betätigungsstellung in eine vorbestimmte Nullstellung verschoben wird, und dass die elektronische Steuereinheit (ECU) ferner dazu eingerichtet ist, eine Größe (S') zu erfassen, die mit einem von dem Element (26') zwischen seiner Nullstellung und seiner Betätigungsstellung zurückgelegten Weg korreliert ist, und die erfasste Größe (S') mit einer gespeicherten Referenzgröße ($S'_{neu}$) zu vergleichen, wobei die Referenzgröße ($S'_{neu}$) mit einem von dem Element (26') zurückgelegten Weg bei einer mit neuen Reibbelägen (14, 14') ausgestatteten Fahrzeugbremse korreliert ist.

**4.** Elektrisch betätigbare Fahrzeugbremse nach Anspruch 3,
**dadurch gekennzeichnet, dass** die Einrichtung (44) zur Festlegung der Ruhestellung des Bremskolbens (30) eine "Rollback"-Dichtung ist. ,

**5.** Elektrisch betätigbare Fahrzeugbremse nach Anspruch 4,
**dadurch gekennzeichnet, dass** die elektronische Steuereinheit (ECU) dazu eingerichtet ist, ein Warnsignal an den Fahrzeugführer auszugeben, wenn eine Differenz ($\Delta S'$) zwischen der erfassten Größe (S') und der gespeicherten Referenzgröße ($S'_{neu}$) einen vorbestimmten Wert überschreitet

**6.** Elektrisch betätigbare Fahrzeugbremse nach einem der Ansprüche 1 bis 5,
**dadurch gekennzeichnet, dass** die vorbestimmte Betriebsbedingung erfüllt ist, wenn das Fahrzeug seit der letzten Kalibrierung der Bremse eine vorbestimmte Strecke zurückgelegt hat.

**7.** Elektrisch betätigbare Fahrzeugbremse nach einem der Ansprüche 1 bis 6,
**dadurch gekennzeichnet, dass** die vorbestimmte Betriebsbedingung erfüllt ist, wenn eine zu einem Klemmkraftgradienten (dF/dt) korrelierte Größe einen vorbestimmten, kritischen Wert ($dF/dt_{krit}$) überschreitet.

**8.** Elektrisch betätigbare Fahrzeugbremse nach einem der Ansprüche 1 bis 7,
**dadurch gekennzeichnet, dass** die vorbestimmte Betriebsbedingung erfüllt ist, wenn anhand eines mathematischen Modells ein kritischer Bremsbelagverschleiss festgestellt wird.

**9.** Elektrisch betätigbare Fahrzeugbremse nach einem der Ansprüche 1 bis 8,
**dadurch gekennzeichnet, dass** die vorbestimmte Betriebsbedingung erfüllt ist, wenn die Zündung des Fahrzeugs ausgeschaltet ist.

**10.** Elektrisch betätigbare Fahrzeugbremse nach einem der Ansprüche 1 bis 9,
**dadurch gekennzeichnet, dass** die vorbestimmte Betriebsbedingung erfüllt ist, wenn sich das Fahrzeug im Stillstand befindet.

**11.** Elektrisch betätigbare Fahrzeugbremse nach einem der Ansprüche 1 bis 10,
**dadurch gekennzeichnet, dass** die vorbestimmte Betriebsbedingung erfüllt ist, wenn die Fahrzeugbremse nicht oder noch nicht zugespannt ist.

**12.** Elektrisch betätigbare Fahrzeugbremse nach einem der Ansprüche 1 bis 11,
**dadurch gekennzeichnet, dass** die vorbestimmte Betriebsbedingung erfüllt ist, wenn sich das Fahrzeug in der Ebene befindet.

**13.** Elektrisch betätigbare Fahrzeugbremse nach einem der Ansprüche 1 bis 12,
**dadurch gekennzeichnet, dass** die elektronische Steuereinheit (ECU) dazu eingerichtet ist, während des Verschiebens des Bremskolbens (30) in seine Betätigungsstellung, in der der Bremskolben (30) den wenigstens einen Reibbelag (14, 14') an das Drehglied (16) anlegt, eine zu einer Klemmkraft (F) korrelierte Größe sowie eine für die Betätigung des Elektromotors (20) charakteristische Größe durch entsprechende Aufnehmer (36) zu erfassen, daraus die Betätigungsstellung des Bremskolbens (30) zu ermitteln, bei der der Reibbelag (14, 14') an dem Drehglied (16) der Fahrzeugbremse anliegt, und diese ermittelte Betätigungsstellung für die Verschiebungen des Bremskolbens (30) und/oder des auf den Bremskolben (30) wirkenden Elements (26') der Getriebeeinheit (26', 28') zugrundezulegen.

**14.** Elektrisch betätigbare Fahrzeugbremse nach Anspruch 13,
**dadurch gekennzeichnet, dass** die elektronische Steuereinheit (ECU) dazu eingerichtet und programmiert ist, aus den Wertepaaren der erfaßten Klemmkraft (F) und der zugehörigen, für die Betätigung des Elektromotors (20) charakteristischen Größe mittels eines Approximationsverfahrens eine Näherungsfunktion zu bestimmen.

**15.** Elektrisch betätigbare Fahrzeugbremse nach Anspruch 14,
**dadurch gekennzeichnet, dass** die elektronische Steuereinheit (ECU) dazu eingerichtet und programmiert ist, aus wenigstens drei Wertepaaren mit einem Approximationsverfahren eine polynomiale Näherungsfunktion wenigstens 2. Ordnung zu bestimmen.

**16.** Elektrisch betätigbare Fahrzeugbremse nach Anspruch 15,
**dadurch gekennzeichnet, dass** die elektronische Steuereinheit (ECU) dazu eingerichtet und programmiert ist, eine Nullstelle der polynomialen Näherungsfunktion mit positiver Steigung, oder, falls eine Nullstelle mit positiver Steigung nicht bestimmbar ist, das Minimum der polynomialen Näherungsfunktion als Betätigungsstellung des Bremskolbens (30), bei der der Reibbelag (14, 14') an dem Drehglied (16) der Fahrzeugbremse anliegt, zu bestimmen.

**17.** Elektrisch betätigbare Fahrzeugbremse nach Anspruch 14,
**dadurch gekennzeichnet, dass** die für die Betätigung des Elektromotors (20) charakteristischen Größen die Stromaufnahme, Weg- oder Winkelschritte des Elektromotors (20) umfassen.

**18.** Elektrisch betätigbare Fahrzeugbremse nach einem der Ansprüche 13 bis 17,
**dadurch gekennzeichnet, dass** die zu der Klemmkraft (F) korrelierte Größe die Klemmkraft (F) selbst, die Umfangskraft, das Bremsmoment oder die vom Rad auf die Fahrbahn aufgebrachte Reibkraft umfassen.

**19.** Verfahren zur Steuerung einer elektrisch betätigbaren Fahrzeugbremse mit

- einem Bremskolben (30), der auf wenigstens einen Reibbelag (14, 14') wirkt und aus einer Ruhestellung in eine Betätigungsstellung verschiebbar ist, in der der Bremskolben (30) den Reibbelag (14, 14') gegen ein mit einem Rad des Kraftfahrzeuges drehfest verbindbares Drehglied (16) der Fahrzeugbremse anlegt, und
- einer von einem Elektromotor (20) angetriebenen, auf den Bremskolben (30) wirkenden Getriebeeinheit (26, 28) zum Betätigen des Bremskolbens (30), wobei
- der Elektromotor (20) durch eine elektronische Steuereinheit (ECU) anzusteuern ist, die auch dazu eingerichtet ist, Betriebsparameter des Fahrzeugs, des Elektromotors (20) und/oder der Fahrzeugbremse zu erfassen, mit den Schritten:
- Bestimmen eines gewünschten Bremslüftspiels ($L_{neu}$),

- Erfassen mindestens einer vorbestimmten Betriebsbedingung,
- Verschieben des Bremskolbens (30) zur Kalibrierung der Bremse in eine erste Richtung in seine Betätigungsstellung, in der der wenigstens eine Reibbelag (14, 14') an dem Drehglied (16) anliegt in Reaktion auf die Erfassung der mindestens einen vorbestimmten Betriebsbedingung, und
- Zurückverschieben des Bremskolbens (30) in eine der ersten Richtung entgegengesetzte zweite Richtung in seine Ruhestellung um einen Weg, der dem vorbestimmten, gewünschten Bremslüftspiel ($L_{neu}$) entspricht,

**dadurch gekennzeichnet, dass** das Verfahren die zusätzlichen Schritte umfasst:

- Verschieben des Bremskolbens (30) in eine vorbestimmte Nullstellung vor dem Verschieben des Bremskolbens (30) in seine Betätigungsstellung,
- Erfassen einer Größe (S), die mit einem von dem Bremskolben (30) zwischen seiner Nullstellung und seiner Betätigungsstellung zurückgelegten Weg korreliert ist, und
- Vergleichen der erfassten Größe (S) mit einer gespeicherten Referenzgröße ($S_{neu}$), die mit einem von dem Bremskolben (30) zurückgelegten Weg bei einer mit neuen Reibbelägen (14, 14') ausgestatteten Fahrzeugbremse korreliert ist.

20. Verfahren zur Steuerung einer elektrisch betätigbaren Fahrzeugbremse nach Anspruch 19, **gekennzeichnet durch** den zusätzlichen Schritt:

- Ausgeben eines Warnsignals an den Fahrzeugführer, wenn eine Differenz ($\Delta S$) zwischen der erfassten Größe (S) und der gespeicherten Referenzgröße ($S_{neu}$) einen vorbestimmten Wert überschreitet.

21. Verfahren zur Steuerung einer elektrisch betätigbaren Fahrzeugbremse mit

- einem Bremskolben (30), der auf wenigstens einen Reibbelag (14, 14') wirkt und aus einer Ruhestellung in eine Betätigungsstellung verschiebbar ist, in der der Bremskolben (30) den Reibbelag (14, 14') gegen ein mit einem Rad des Kraftfahrzeuges drehfest verbindbares Drehglied (16) der Fahrzeugbremse anlegt, wobei der Bremskolben (30) mittels eines auf den Bremskolben (30) wirkenden Elements (26') einer von einem Elektromotor (20) angetriebenen Getriebeeinheit (26', 28') betätigbar ist, und
- einer Einrichtung (44) zur Festlegung der Ruhestellung des Bremskolbens (30), in der ein vorbestimmtes, gewünschtes Bremslüftspiel ($L_{neu}$) konstant gehalten wird, wobei
- der Elektromotor (20) durch eine elektronische Steuereinheit (ECU) anzusteuern ist, die auch dazu eingerichtet ist, Betriebsparameter des Fahrzeugs, des Elektromotors (20) und/oder der Fahrzeugbremse zu erfassen, mit den Schritten:
- Bestimmen eines gewünschten Abstands ($A_{neu}$) zwischen dem auf den Bremskolben (30) wirkenden Element (26') der Getriebeeinheit (26', 28') und dem Bremskolben (30) bei nicht betätigter Bremse,
- Erfassen mindestens einer vorbestimmten Betriebsbedingung,
- Verschieben des Elements (26') zur Kalibrierung der Bremse in eine erste Richtung in seine Betätigungsstellung, in der der von dem Element (26') betätigte Bremskolben (30) den wenigstens einen Reibbelag (14, 14') an das Drehglied (16) anlegt, in Reaktion auf die Erfassung der mindestens einen vorbestimmten Betriebsbedingung, und
- Zurückverschieben des Elements (26') in eine der ersten Richtung entgegengesetzte zweite Richtung in seine Ruhestellung um einen Weg, der einer Summe aus dem vorbestimmten, gewünschten Bremslüftspiel ($L_{neu}$) und dem vorbestimmten, gewünschten Abstand ($A_{neu}$) zwischen dem Element (26') und dem Bremsolben (30) bei nicht betätigter Bremse entspricht,

**dadurch gekennzeichnet, dass** das Verfahren die zusätzlichen Schritte umfasst:

- Verschieben des auf den Bremskolben (30) wirkenden Elements (26') der Getriebeeinheit (26', 28') in eine vorbestimmte Nullstellung vor dem Verschieben des Elements (26') in seine Betätigungsstellung,
- Erfassen einer Größe (S'), die mit einem von dem Element (26') zwischen seiner Nullstellung und seiner Betätigungsstellung zurückgelegten Weg korreliert ist, und
- Vergleichen der erfassten Größe (S') mit einer gespeicherten Referenzgröße ($S'_{neu}$), die mit einem von dem Element (26') zurückgelegten Weg bei einer mit neuen Reibbelägen (14, 14') ausgestatteten Fahrzeugbremse korreliert ist.

22. Verfahren zur Steuerung einer elektrisch betätigbaren Fahrzeugbremse nach Anspruch 21,

**gekennzeichnet durch** den zusätzlichen Schritt:

- Ausgeben eines Warnsignals an den Fahrzeugführer, wenn eine Differenz ($\Delta$S') zwischen der erfassten Größe (S') und der gespeicherten Referenzgröße (S'$_{neu}$) einen vorbestimmten Wert überschreitet.

## Claims

1. Electrically actuatable vehicle brake comprising

   - a brake piston (30), which acts on at least one friction lining (14, 14') and can be displaced out of an initial position into an actuation position in which the brake piston (30) abuts the friction lining (14, 14') against a rotating member (16) of the vehicle brake which can be connected, fixed against rotation, to a wheel of the motor vehicle, and
   - a transmission unit (26, 28) driven by an electric motor (20) and acting on the brake piston (30) to actuate the brake piston (30), wherein
   - the electric motor (20) is to be triggered by an electronic control unit (ECU), which is also set up to detect performance parameters of the vehicle, the electric motor (20) and/or the vehicle brake, wherein
   - the electronic control unit (ECU) is set up and programmed to trigger the electric motor (20) by means of a control and evaluation program running in it in such a way that to calibrate the brake the brake piston (30) is displaced in response to the detecting of at least one predetermined operating condition in a first direction into its actuation position, in which the at least one friction lining (14, 14') abuts against the rotating member (16), and the brake piston (30) is then displaced by a path corresponding to a predetermined, desired brake release play (L$_{new}$) in a second direction opposite the first direction, into its initial position,

   **characterised in that** the electronic control unit (ECU) is set up to trigger the electric motor (20) in such a way that the brake piston (30) is displaced into a predetermined zero position before being displaced into its actuation position and that the electronic control unit (ECU) is further set up to detect a dimension (S) which is correlated to a path covered by the brake piston (30) between its zero position and its actuation position and to compare the detected dimension (S) with a stored reference dimension (S$_{new}$), the reference dimension (S$_{new}$) being correlated to a path covered by the brake piston (30) in a vehicle brake fitted with new friction linings (14, 14').

2. Electrically actuatable vehicle brake according to claim 1,
   **characterised in that** the electronic control unit (ECU) is set up to issue a warning signal to the vehicle driver if a difference ($\Delta$S) between the detected dimension (S) and the stored reference dimension (S$_{new}$) exceeds a predetermined value (S$_{crit}$).

3. Electrically actuatable vehicle brake comprising

   - a brake piston (30), which acts on at least one friction lining (14, 14') and can be displaced out of an initial position into an actuation position in which the brake piston (30) abuts the friction lining (14, 14') against a rotating member (16) of the vehicle brake which can be connected, fixed against rotation, to a wheel of the motor vehicle, wherein the brake piston (30) is actuatable by means of an element (26') of a transmission unit (26', 28') driven by an electric motor (20) and acting on the brake piston (30), and
   - a device (44) for fixing the initial position of the brake piston (30) in which a predetermined, desired brake release play (L$_{new}$) is kept constant, wherein
   - the electric motor (20) is to be triggered by an electronic control unit (ECU), which is also set up to detect performance parameters of the vehicle, the electric motor (20) and/or the vehicle brake, wherein
   - the electronic control unit (ECU) is set up and programmed to trigger the electric motor (20) by means of a control and evaluation program running in it in such a way that to calibrate the brake the element (26') is displaced in response to the detecting of at least one predetermined operating condition in a first direction into its actuation position, in which the brake piston (30) actuated by the element (26') abuts the at least one friction lining (14, 14') against the rotating member (16), and the element (26') is then displaced by a path corresponding to the predetermined brake release play (L$_{new}$) and possibly a predetermined distance between the element (26') and the brake piston (30) when the brake is not actuated in a second direction opposite the first direction, into its initial position

   **characterised** in that the electronic control unit (ECU) is set up to trigger the electric motor (20) in such a way that the element (26') of the transmission unit (26', 28') acting on the brake piston (30) is displaced into a predetermined zero position before being displaced into its actuation position and that the electronic control unit (ECU) is further set up to detect a dimension (S') which is correlated to a path covered by the element (26') between its zero position and its actuation position and to compare the detected dimension (S') with a stored reference dimension (S'$_{new}$), the reference dimension (S'$_{new}$) being correlated to a path covered by the element (26') in a vehicle brake fitted with new friction linings (14, 14').

4. Electrically actuatable vehicle brake according to claim 3,
**characterised in that** the device (44) for fixing the initial position of the brake piston (30) is a "rollback" seal.

5. Electrically actuatable vehicle brake according to claim 4,
**characterised in that** the electronic control unit (ECU) is set up to issue a warning signal to the vehicle driver if a difference ($\triangle$S') between the detected dimension (S') and the stored reference dimension (S'$_{new}$) exceeds a predetermined value.

6. Electrically actuatable vehicle brake according to one of claims 1 to 5,
**characterised in that** the predetermined operating condition is met if the vehicle has covered a predetermined distance since the last calibration of the brake.

7. Electrically actuatable vehicle brake according to one of claims 1 to 6,
**characterised in that** the predetermined operating condition is met if a dimension correlated to a clamping force gradient (dF/dt) exceeds a predetermined critical value (dF/dt$_{crit}$).

8. Electrically actuatable vehicle brake according to one of claims 1 to 7,
**characterised in that** the predetermined operating condition is met if a critical wear of a brake lining is established using a mathematical model.

9. Electrically actuatable vehicle brake according to one of claims 1 to 8,
**characterised in that** the predetermined operating condition is met if the ignition of the vehicle is switched off.

10. Electrically actuatable vehicle brake according to one of claims 1 to 9,
**characterised in that** the predetermined operating condition is met if the vehicle is stationary.

11. Electrically actuatable vehicle brake according to one of claims 1 to 10,
**characterised in that** the predetermined operating condition is met if the vehicle brake is not or has not yet been applied.

12. Electrically actuatable vehicle brake according to one of claims 1 to 11,
**characterised in that** the predetermined operating condition is met if the vehicle is on the flat.

13. Electrically actuatable vehicle brake according to one of claims 1 to 12,
**characterised in that** the electronic control unit (ECU) is set up to detect a dimension correlated to a clamping force (F) and a dimension characteristic of the actuation of the electric motor (20) by appropriate transducers (36) during displacement of the brake piston (30) into its actuation position, in which the brake piston (30) abuts the at least one friction lining (14, 14') against the rotating member (16), from this to estimate the actuation position of the brake piston (30) at which the friction lining (14, 14') abuts the rotating member (16) of the vehicle brake and to use this estimated actuation position as the basis for the displacements of the brake piston (30) and/or the element (26') of the transmission unit (26', 28') acting on the brake piston (30).

14. Electrically actuatable vehicle brake according to claim 13,
**characterised in that** the electronic control unit (ECU) is set up and programmed to determine an approximation function from the pairs of values of the detected clamping force (F) and the associated dimension characteristic of actuation of the electric motor (20) by means of a method of approximation.

15. Electrically actuatable vehicle brake according to claim 14,
**characterised in that** the electronic control unit (ECU) is set up and programmed to determine a polynomial approximation function of at least the second order from at least three pairs of values by a method of approximation.

**16.** Electrically actuatable vehicle brake according to claim 15,
**characterised in that** the electronic control unit (ECU) is set up and programmed to determine a zero position of the polynomial approximation function with positive gradient or, if a zero position with positive gradient cannot be determined, the minimum of the polynomial approximation function as actuation position of the brake piston (30) at which the friction lining (14, 14') abuts the rotating member (16) of the vehicle brake.

**17.** Electrically actuatable vehicle brake according to claim 14,
**characterised in that** the dimensions characteristic of the actuation of the electric motor (20) comprise the current consumption, path or angle steps of the electric motor (20).

**18.** Electrically actuatable vehicle brake according to one of claims 13 to 17,
**characterised in that** the dimension correlated to the clamping force (F) comprises the clamping force (F) itself, the peripheral force, the braking moment or the frictional force exerted on the roadway by the wheel.

**19.** Method for controlling an electrically actuatable vehicle brake comprising

- a brake piston (30), which acts on at least one friction lining (14, 14') and can be displaced out of an initial position into an actuation position in which the brake piston (30) abuts the friction lining (14, 14') against a rotating member (16) of the vehicle brake which can be connected, fixed against rotation, to a wheel of the motor vehicle, and
- a transmission unit (26, 28), driven by an electric motor (20) and acting on the brake piston (30) to actuate the brake piston (30), wherein
- the electric motor (20) is to be triggered by an electronic control unit (ECU), which is also set up to detect performance parameters of the vehicle, the electric motor (20) and/or the vehicle brake, with the steps:
- determining a desired brake release play ($L_{new}$),
- detecting at least one predetermined operating condition,
- to calibrate the brake, displacing the brake piston (30) in a first direction into its actuation position in which the at least one friction lining (14, 14') abuts the rotating member (16) in response to the detecting of the at least one predetermined operating condition and
- displacing the brake piston (30) in a second direction opposite the first direction back into its initial position by a path corresponding to the predetermined, desired brake release play ($L_{new}$),

**characterised** in that the method comprising the additional steps:

- displacing the brake piston (30) into a predetermined zero position before the brake piston (30) is displaced into its actuation position,
- detecting a dimension (S) which is correlated to a path covered by the brake piston (30) between its zero position and its actuation position and
- comparing the detected dimension (S) with a stored reference dimension ($S_{new}$) which is correlated to a path covered by the brake piston (30) in a vehicle brake fitted with new friction linings (14, 14').

**20.** Method for controlling an electrically actuatable vehicle brake according to claim 19,
**characterised by** the additional step:

- issuing a warning signal to the vehicle driver if a difference ($\Delta S$) between the detected dimension (S) and the stored reference dimension ($S_{new}$) exceeds a predetermined value.

**21.** Method for controlling an electrically actuatable vehicle brake comprising

- a brake piston (30), which acts on at least one friction lining (14, 14') and can be displaced out of an initial position into an actuation position in which the brake piston (30) abuts the friction lining (14, 14') against a rotating member (16) of the vehicle brake which can be connected, fixed against rotation, to a wheel of the motor vehicle, wherein the brake piston (30) is actuatable by means of an element (26') of a transmission unit (26', 28') driven by an electric motor (20) acting on the brake piston (30) and
- a device (44) for fixing the initial position of the brake piston (30), in which a predetermined, desired brake release play ($L_{new}$) is kept constant, wherein
- the electric motor (20) is to be triggered by an electronic control unit (ECU), which is also set up to detect performance parameters of the vehicle, the electric motor (20) and/or the vehicle brake, with the steps:

- determining a desired distance ($A_{new}$) between the element (26') of the transmission unit (26', 28') acting on the brake piston (30) and the brake piston (30) when the brake is not actuated,
- detecting at least one predetermined operating condition,
- to calibrate the brake, displacing the element (26') in a first direction into its actuation position in which the brake piston (30) actuated by the element (26') abuts the at least one friction lining (14, 14') against the rotating member (16) in response to the detecting of the at least one predetermined operating condition and
- displacing the element (26') in a second direction opposite the first direction back into its initial position by a path corresponding to a sum made up of the predetermined, desired brake release play ($L_{new}$) and the predetermined, desired distance ($A_{new}$) between the element (26') and the brake piston (30) when the brake is not actuated,

**characterised** in that the method comprises the additional steps:

- displacing the element (26') of the transmission unit (26', 28') acting on the brake piston (30) into a predetermined zero position before the element (26') is displaced into its actuation position,
- detecting a dimension (S) which is correlated to a path covered by the element (26') between its zero position and its actuation position and
- comparing the detected dimension (S') with a stored reference dimension ($S'_{new}$) which is correlated to a path covered by the element (26') in a vehicle brake fitted with new friction linings (14, 14').

22. Method for controlling an electrically actuatable vehicle brake according to claim 21, **characterised by** the additional step:

- issuing a warning signal to the vehicle driver if a difference ($\Delta S'$) between the detected dimension (S') and the stored reference dimension ($S'_{new}$) exceeds a predetermined value.

**Revendications**

1. Frein de véhicule à actionnement électrique avec

- un piston de frein (30) qui agit sur au moins une garniture de friction (14, 14') et qui est déplaçable d'une position de repos dans une position d'actionnement, dans laquelle le piston de frein (30) appuie la garniture de friction (14, 14') contre un élément rotatif (16) du frein de véhicule pouvant être relié de façon solidaire en rotation avec une roue du véhicule, et
- une unité de transmission (26, 28) entraînée par un moteur électrique (20) agissant sur le piston de frein (30), pour l'actionnement du piston de frein (30),
- le moteur électrique (20) devant être actionné par une unité de commande électronique (ECU), qui est conçue pour détecter des paramètres d'exploitation du véhicule, du moteur électrique (20) et/ou du frein du véhicule,
- l'unité de commande électronique (ECU) étant conçue et programmée pour actionner le moteur électrique (20) au moyen d'un programme de commande et d'évaluation exécuté en son sein, de façon à ce que pour le calibrage du frein, en réaction à la détection d'au moins une condition de fonctionnement prédéfinie, le piston de frein (30) soit déplacé dans une première direction dans sa position d'actionnement dans laquelle la au moins une garniture de friction (14, 14') s'appuie sur l'élément en rotation (16) et que le piston de frein (30) soit déplacé ensuite de la valeur d'une course qui correspond à un jeu souhaité prédéfini d'armature du frein ($L_{neu}$), dans sa position de repos, dans une deuxième direction opposée à la première direction,

**caractérisé en ce que** l'unité de commande électronique (ECU) est conçue pour actionner le moteur électrique (20) de façon à ce qu'avant d'être déplacé dans sa position d'actionnement, le piston de freinage (30) soit déplacé dans une position neutre prédéfinie, et **en ce que** l'unité de commande électronique (ECU) est conçue par ailleurs de façon à détecter une dimension (S) qui est mise en corrélation avec une course parcourue par le piston de frein (30) entre sa position neutre et sa position d'actionnement, et à comparer la dimension détectée (S) avec une dimension de référence mémorisée ($S_{neu}$), la dimension de référence mémorisée ($S_{neu}$) étant mise en corrélation avec une course parcourue par le piston de frein (30) sur un frein de véhicule équipé de nouvelles garnitures de friction (14, 14').

2. Frein de véhicule à actionnement électrique selon la revendication 1, **caractérisé en ce que** l'unité de commande électronique (ECU) est conçue pour délivrer à l'attention du conducteur du véhicule un signal d'alerte si une différence (AS) entre la dimension détectée (S) et la dimension de référence mémorisée (S$_{neu}$) dépasse une valeur prédéfinie (S$_{krit}$).

3. Frein de véhicule à actionnement électrique avec

  - un piston de frein (30) qui agit sur au moins une garniture de friction (14, 14') et qui est déplaçable d'une position de repos dans une position d'actionnement, dans laquelle le piston de frein (30) appuie la garniture de friction (14, 14') contre un élément rotatif (16) du frein de véhicule pouvant être relié de façon solidaire en rotation avec une roue du véhicule, le piston de frein (30) pouvant être actionné à l'aide d'un élément (26') agissant sur le piston de frein (30) d'une unité de transmission (26', 28') entraînée par un moteur électrique (20), et
  - un dispositif (44) pour fixer la position de repos du piston de frein (30) dans laquelle un jeu souhaité prédéfini d'armature du frein (L$_{neu}$) est maintenu à l'état constant,
  - le moteur électrique (20) devant être actionné par une unité de commande électronique (ECU), qui est conçue pour détecter des paramètres de fonctionnement du véhicule, du moteur électrique (20) et/ou du frein du véhicule,
  - l'unité de commande électronique (ECU) étant conçue et programmée pour actionner le moteur électrique (20) au moyen d'un programme de commande et d'évaluation exécuté en son sein, de façon à ce que pour le calibrage du frein, en réaction à la détection d'au moins une condition de fonctionnement prédéfinie, l'élément (26') soit déplacé dans une première direction dans sa position d'actionnement dans laquelle le piston de frein (30) actionné par l'élément (26') appuie la au moins une garniture de friction (14, 14') sur l'élément en rotation (16) et l'élément (26') soit déplacé ensuite de la valeur d'une course qui correspond à un jeu souhaité prédéfini d'armature du frein (L$_{neu}$) et le cas échéant d'une distance prédéfinie entre l'élément (26') et le piston de frein (30) lorsque le frein n'est pas actionné, dans sa position de repos, dans une deuxième direction opposée à la première direction,

  **caractérisé en ce que** l'unité de commande électronique (ECU) est conçue pour actionner le moteur électrique (20) de façon à ce qu'avant d'être déplacé dans sa position d'actionnement, l'élément (26') de l'unité de transmission (26', 28') qui agit sur le piston de frein (30) soit déplacé dans une position neutre prédéfinie et **en ce que** l'unité de commande électronique (ECU) est conçue par ailleurs pour détecter une dimension (S') qui est mise en corrélation avec une course parcourue par l'élément (26') entre sa position neutre et sa position d'actionnement et pour comparer la dimension détectée (S') avec une dimension de référence mémorisée (S'$_{neu}$), la dimension de référence mémorisée (S'$_{neu}$) étant mise en corrélation avec une course parcourue par l'élément (26') sur un frein de véhicule équipé de nouvelles garnitures de friction (14, 14').

4. Frein de véhicule à actionnement électrique selon la revendication 3, **caractérisé en ce que** le dispositif (44) pour fixer la position de repos du piston de frein (30) est un joint de "repositionnement".

5. Frein de véhicule à actionnement électrique selon la revendication 4, **caractérisé en ce que** l'unité de commande électronique (ECU) est conçue pour délivrer à l'attention du conducteur du véhicule un signal d'alerte si une différence (∆S') entre la dimension détectée (S') et la dimension de référence mémorisée (S'$_{neu}$) dépasse une valeur prédéfinie.

6. Frein de véhicule à actionnement électrique selon l'une des revendications 1 à 5, **caractérisé en ce que** la condition de fonctionnement prédéfinie est satisfaite lorsque le véhicule a parcouru un trajet défini depuis le dernier calibrage du frein.

7. Frein de véhicule à actionnement électrique selon l'une des revendications 1 à 6, **caractérisé en ce que** la condition de fonctionnement prédéfinie est satisfaite lorsqu'une dimension mise en corrélation avec un gradient d'effort de serrage (dF/dt) dépasse une valeur critique prédéfinie (dF/dt$_{krit}$).

8. Frein de véhicule à actionnement électrique selon l'une des revendications 1 à 7, **caractérisé en ce que** la condition de fonctionnement prédéfinie est satisfaite lorsqu'une usure critique des garnitures de freins est constatée au moyen d'un modèle mathématique.

9. Frein de véhicule à actionnement électrique selon l'une des revendications 1 à 8, **caractérisé en ce que** la condition de fonctionnement prédéfinie est satisfaite lorsque l'allumage du véhicule est hors service.

10. Frein de véhicule à actionnement électrique selon l'une des revendications 1 à 9, **caractérisé en ce que** la condition de fonctionnement prédéfinie est satisfaite lorsque le véhicule se trouve à l'arrêt.

**11.** Frein de véhicule à actionnement électrique selon l'une des revendications 1 à 10, **caractérisé en ce que** la condition d'exploitation prédéfinie est satisfaite lorsque le frein du véhicule n'est pas ou pas encore appliqué.

**12.** Frein de véhicule à actionnement électrique selon l'une des revendications 1 à 11, **caractérisé en ce que** la condition de fonctionnement prédéfinie est satisfaite lorsque le véhicule est en position plane.

**13.** Frein de véhicule à actionnement électrique selon l'une des revendications 1 à 12, **caractérisé en ce que** l'unité de commande électronique (ECU) est conçue pour détecter, pendant le déplacement du piston de frein (30) dans sa position d'actionnement, dans laquelle le piston de frein (30) appuie la au moins une garniture de friction (14, 14') sur l'élément rotatif (16), une dimension mise en corrélation avec un effort de serrage (F), ainsi qu'une dimension caractéristique pour l'actionnement du moteur électrique (20) par des capteurs (36) correspondants, pour déterminer à partir de ces dernières la position d'actionnement du piston de frein (30), dans laquelle la garniture de friction (14, 14') s'appuie sur l'élément rotatif (16) du frein de véhicule, et pour se baser sur cette position d'actionnement déterminée pour les déplacements du piston de frein (30) et/ou de l'élément (26') de l'unité de transmission (26', 28') agissant sur le piston de frein (30).

**14.** Frein de véhicule à actionnement électrique selon la revendication 13, **caractérisé en ce que** l'unité de commande électronique (ECU) est conçue et programmée pour déterminer à partir des paires de valeurs de l'effort de serrage (F) détecté et des dimensions correspondantes caractéristiques pour l'actionnement du moteur électrique (20) une fonction d'approximation, au moyen d'un procédé d'approximation.

**15.** Frein de véhicule à actionnement électrique selon la revendication 14, **caractérisé en ce que** l'unité de commande électronique (ECU) est conçue et programmée pour déterminer à partir d'au moins trois paires de valeurs une fonction d'approximation polynomiale au moins du 2$^{ème}$ ordre, à l'aide d'un procédé d'approximation.

**16.** Frein de véhicule à actionnement électrique selon la revendication 15, **caractérisé en ce que** l'unité de commande électronique (ECU) est conçue et programmée pour déterminer une position zéro de la fonction d'approximation polynomiale à gradient positif ou s'il est impossible de déterminer une position zéro à gradient positif, le minimum de la fonction d'approximation polynomiale en tant que position d'actionnement du piston de frein (30), dans laquelle la garniture de friction (14, 14') s'appuie sur l'élément rotatif (16) du frein de véhicule.

**17.** Frein de véhicule à actionnement électrique selon la revendication 14, **caractérisé en ce que** les dimensions caractéristiques pour l'actionnement du moteur électrique (20) comprennent la consommation de courant, les pas de course ou les pas angulaires du moteur électrique (20).

**18.** Frein de véhicule à actionnement électrique selon l'une quelconque des revendications 13 à 17, **caractérisé en ce que** les dimensions mises en corrélation avec l'effort de serrage (F) comprennent l'effort de serrage (F) lui-même, la force périphérique, le couple de freinage ou la force de friction appliquée par la roue sur la voie de circulation.

**19.** Procédé de commande d'un frein de véhicule à actionnement électrique avec

- un piston de frein (30) qui agit sur au moins une garniture de friction (14, 14') et qui est déplaçable d'une position de repos dans une position d'actionnement, dans laquelle le piston de frein (30) appuie la garniture de friction (14, 14') contre un élément rotatif (16) du frein de véhicule pouvant être relié de façon solidaire en rotation avec une roue du véhicule automobile et
- une unité de transmission (26, 28) entraînée par le moteur électrique (20) agissant sur le piston de frein (30), pour l'actionnement du piston de frein (30),
- le moteur électrique (20) devant être actionné par une unité de commande électronique (ECU), qui est conçue pour détecter des paramètres de fonctionnement du véhicule, du moteur électrique (20) et/ou du frein du véhicule, avec les étapes :
- détermination d'un jeu d'armature du frein souhaité (L$_{neu}$),
- détection d'au moins une condition de fonctionnement prédéfinie,
- déplacement du piston de frein (30) pour le calibrage du frein dans une première direction dans sa position d'actionnement, dans laquelle la au moins une garniture de friction (14, 14') s'appuie sur l'élément rotatif (16), en réaction à la détection de la au moins une condition de fonctionnement prédéfinie et
- déplacement en retour du piston de frein (30) dans sa position de repos, dans une deuxième direction opposée à la première direction, de la valeur d'une course qui correspond au jeu d'armature du frein souhaité, prédéfini (L$_{neu}$), **caractérisé en ce que** le procédé comprend les étapes supplémentaires :

- déplacement du piston de frein (30) dans une position neutre prédéfinie avant le déplacement du piston de frein (30) dans sa position d'actionnement,
- détection d'une dimension (S), qui est mise en corrélation avec une course parcourue par le piston de frein (30) entre sa position neutre et sa position d'actionnement, et
- comparaison de la dimension détectée (S) avec une dimension de référence mémorisée ($S_{neu}$), qui est mise en corrélation avec une course parcourue par le piston de frein (30) sur un frein de véhicule équipé de garnitures de friction neuves (14, 14').

**20.** Procédé de commande d'un frein de véhicule à actionnement électrique selon la revendication 19, **caractérisé par** l'étape supplémentaire :

- délivrance d'un signal d'alerte à l'attention du conducteur du véhicule si une différence ($\triangle S$) entre la dimension détectée (S) et la dimension de référence mémorisée ($S_{neu}$) dépasse une valeur prédéfinie.

**21.** Procédé de commande d'un frein de véhicule à actionnement électrique avec :

- un piston de frein (30) qui agit sur au moins une garniture de friction (14, 14') et qui est déplaçable d'une position de repos dans une position d'actionnement, dans laquelle le piston de frein (30) appuie la garniture de friction (14, 14') contre un élément rotatif (16) du frein de véhicule pouvant être relié de façon solidaire en rotation avec une roue du véhicule, le piston de frein (30) pouvant être actionné à l'aide d'un élément (26') d'une unité de transmission (26', 28') entraînée par le moteur électrique (20) qui agit sur le piston de frein (30), et
- un dispositif (44) pour fixer la position de repos du piston de frein (30) dans laquelle un jeu souhaité prédéfini d'armature du frein ($L_{neu}$) est maintenu à l'état constant,
- le moteur électrique (20) devant être actionné par une unité de commande électronique (ECU), qui est conçue pour détecter des paramètres de fonctionnement du véhicule, du moteur électrique (20) et/ou du frein du véhicule, avec les étapes :
- détermination d'une distance souhaitée ($A_{neu}$) entre l'élément (26') de l'unité de transmission (26', 28') agissant sur le piston de frein (30) et le piston de frein (30) lorsque le frein n'est pas actionné,
- détection d'au moins une condition de fonctionnement prédéfinie,
- déplacement de l'élément (26') pour le calibrage du frein dans une première direction dans sa position d'actionnement, dans laquelle le piston de frein (30) actionné par l'élément (26') appuie la au moins une garniture de friction (14, 14') sur l'élément rotatif (16), en réaction à la détection de la au moins une condition d'exploitation prédéfinie et
- déplacement en retour de l'élément (26') dans sa position de retour, dans une deuxième direction opposée à la première direction de la valeur d'une course qui correspond à la somme du jeu souhaité prédéfini d'armature du frein ($L_{neu}$) et de la distance souhaitée prédéfinie ($A_{neu}$) entre l'élément (26') et le piston de frein (30), lorsque le frein n'est pas actionné,

**caractérisé en ce que** le procédé comprend les étapes supplémentaires :

- déplacement de l'élément (26') de l'unité de transmission (26', 28') qui agit sur le piston de frein (30) dans une position neutre prédéfinie avant le déplacement de l'élément (26') dans sa position d'actionnement,
- détection d'une dimension (S') qui est mise en corrélation avec une course parcourue par l'élément (26') entre sa position neutre et sa position d'actionnement, et
- comparaison de la dimension détectée (S') avec une grandeur de référence ($S'_{neu}$), qui est mise en corrélation avec une course parcourue par l'élément (26') sur un frein de véhicule équipé de garnitures de friction neuves (14, 14').

**22.** Procédé de commande d'un frein de véhicule à actionnement électrique selon la revendication 21, **caractérisé par** l'étape supplémentaire :

- délivrance d'un signal d'alerte à l'attention du conducteur du véhicule si une différence ($\Delta S'$) entre la dimension détectée (S') et la dimension de référence mémorisée ($S'_{neu}$) dépasse une valeur prédéfinie.

Fig. 1

Fig. 2

EP 1 485 282 B1

Fig. 3

Fig. 4    Bestimmung der Betätigungsstellung

Fig. 5

Fig. 6

**10** **10''** **44** **10'** **42** **26'** **281** **12** **30** **20** **32**

**14'** **14** **36** **46** **50** **48** **41**

$L''_{alt} = L'_{neu}$

$L'_{alt} = L'neu$

**16''** **16** **16'** **Aalt**

ECU

H CPU

$S_1$

$S_n$

```
                    ╭─────────╮
                   (   START   )
                    ╰─────────╯
                         │
                         ▼
              ┌────────────────────────┐
              │   Verschieben Mutter   │
              │     in Nullstellung    │
              └────────────────────────┘
                         │
                         ▼
              ┌────────────────────────┐
              │   Setzen Motorschritt- │
              │       signal = O       │
              └────────────────────────┘
                         │
                         ▼
              ┌────────────────────────┐
              │   Verschieben Mutter   │
              │ in Betätigungsstellung │
              └────────────────────────┘
                         │
                         ▼
              ┌────────────────────────┐
              │  Erfassen Motorschritte│
              │    zwischen Null- und  │
              │   Betätigungsstellung  │
              └────────────────────────┘
                         │
                         ▼
              ┌────────────────────────┐
              │        Berechnen       │
              │   ΔS' = S' - S'neu      │
              └────────────────────────┘
                         │
                         ▼                         nein
              ┌────────────────────────┐
              │     ΔS' > S'krit ?      │────────────────┐
              └────────────────────────┘                │
                      ja │                               │
                         ▼                               │
              ┌────────────────────────┐                │
              │   Warnsignal an Fahrer  │                │
              └────────────────────────┘                │
                         │                               │
                         ▼                               │
              ┌────────────────────────┐                │
              │   Verschieben Mutter   │◄───────────────┘
              │  um Aneu in Ruhestellung│
              └────────────────────────┘
                         │
                         ▼
                    ╭─────────╮
                   (   ENDE    )
                    ╰─────────╯
```

Berechnen $\Delta S' = S' - S'_{neu}$

$\Delta S' > S'_{krit}$ ?

Verschieben Mutter um $A_{neu}$ in Ruhestellung

# Fig. 7

START

500 km seit letzter
Kalibrierung gefahren ?

nein

ja

Zündung aus ?
Fahrzeug im Stillstand ?
Fahrzeug in der Ebene?

nein

ja

Ist EPB noch nicht betätigt?

nein

ja

Kalibrierung
gem. Fig. 3 bzw. Fig. 7

ENDE

Fig. 8

START

soll EPB betätigtwerden? → nein

ja

Erfasse Klemmkraftgradienten dF/dt

$dF/dt > (dF/dt)_{krit}$ → nein

ja

Kalibrierung
gem. Fig. 3 bzw. Fig. 7

ENDE

Fig. 9

Fig. 10